# EUROPEAN PATENT APPLICATION

(11) **EP 4 389 331 A1**
(43) Date of publication of application: **26.06.2024**
(21) Application number: 22215591.3
(22) Date of filing: 21.12.2022
(51) Int. Cl.: B23C 5/00, B23C 9/00, B23C 5/28, B23C 5/06, B23C 5/22

(54) **MILLING TOOL BODY AND A MILLING TOOL**

(71) Applicant: Seco Tools AB, 737 82 Fagersta (SE)
(72) Inventor: Hemelings, Dirk, SE-737 82 Fagersta (SE)
(74) Representative: Sandvik

(57) **Abstract**

A milling tool body (2) for a milling tool (1), the milling tool body (2) comprising:
- an axial front end surface (3),
- an axial rear end surface (4),
- a peripheral mantle surface (10) extending between the axial front end surface (3) and the axial rear end surface (4),
- a front end (2a),
- a rear end (2b) being configured for attachment of the milling tool (1) to a machine,
- at least two insert seats (20) and associated chip pocket being entirely provided in the front end (2a),
wherein a cooling duct system (50) contained in the milling tool body (2) is extending from at least one coolant inlet (30) arranged in a first ring-shaped section (11) of the peripheral mantle surface (10) to at least one coolant outlet (40) arranged in a second ring-shaped section (12) of the peripheral mantle surface. The first and the second ring-shaped section are flanked by sealing surfaces formed as surfaces of revolution, preferably as circular cylindrical surfaces.

## Description

### FIELD OF THE INVENTION AND PRIOR ART

The present invention relates to a milling tool body according to the preamble of claim 1. The invention also relates to a milling tool comprising such a milling tool body.

A manufacturing process in metal industry sometimes requires that a hot work piece is milled to desired dimensions, since a manufacturing step preceding to such a milling operation as well as a following step in the manufacturing process requires the work piece to have a high temperature, typically 600-800 °C.

Even though cemented carbide tools and inserts can stand high temperatures, their tool life is shortened. Such a heat load is especially harmful for a milling tool body carrying replaceable cemented carbide inserts if the milling tool is not cooled.

As a result of heat transfer, i.e. heat conduction, convection and radiation, the milling tool body is also subject to heating. When the milling tool body reaches a critical temperature, the material in the milling tool body, which usually is steel, gets softened and cannot withstand mechanical load that arises during the cutting process.

Hence, a milling tool can be used only during a short part of the milling operation before it reaches the critical temperature and must be replaced by another milling tool of the same kind. The replaced tool must be subsequently cooled outside the machining zone. Since such a milling operation may take 30-50 minutes in total, several tools of the same type must be available and alternately used, and several tool changes must be done to complete an entire milling operation.

EP 3 587 031 A1 discloses a milling tool body having an axial front end surface, an axial rear end surface and a longitudinal axis extending between the axial front end surface and the axial rear end surface. The milling tool body comprises at least one coolant inlet and at least one coolant outlet and a cooling duct system contained in the milling tool body. The cooling duct system extends from the at least one coolant inlet to the at least one coolant outlet and is arranged such that coolant supplied via the at least one coolant inlet flows through the cooling duct system to the at least one coolant outlet without leaving the milling tool body, in order to cool the milling tool. The at least one coolant inlet and the at least one coolant outlet are arranged in the axial rear end surface. The milling tool body is attachable to a machine via a tool holder that transmits torque from the machine to the milling tool body. Coolant is delivered to the at least one coolant inlet and returned from the at least one coolant outlet via the tool holder. Each of the at least one coolant inlet is in communication with an orifice of a coolant supply channel arranged in a front face of the tool holder, and each of the at least one coolant outlet is in communication with an orifice of a coolant return channel in the tool holder. This requires tight tolerances in manufacturing of the milling tool body and the tool holder in the interface between the milling tool body and the tool holder, and each tool requires a specific tool holder due to different number of flutes and/or a different tool diameter. The axial rear end surface of the milling tool and the front face of the tool holder must be pressed against each other and held in close contact with each other to prevent leakage of coolant. Due to tool bending during use of the tool, there is a risk that contact between the axial rear end surface of the milling tool and the front face of the tool holder is lost. Additionally, the tool holder has a mount part and a stator and is expensive, especially for tools with a larger tool diameter.

### OBJECT OF THE INVENTION

The object of the present invention is to provide a milling tool for sustainable machining of hot work pieces, which milling tool has a new and favourable design, and solves or at least reduces the above mentioned problems.

### SUMMARY OF THE INVENTION

According to a first aspect of the invention, said object is achieved by means of a milling tool body for a milling tool, the milling tool body having the features defined in claim 1.

A milling tool body for a milling tool is a part of the milling tool that is arranged to carry cutting edges. Through the milling tool body, the milling tool is attached to a milling machine, directly or via a tool holder. The cutting edges may be formed integral with the milling tool body or be arranged on replaceable cutting inserts mountable into insert seats arranged in the milling tool body. Such an insert seat may be formed in a replaceable cartridge mounted into the milling tool body.

The milling tool body according to the first aspect of the invention comprises:
- an axial front end surface,
- an axial rear end surface opposite to the axial front end surface,
- a peripheral mantle surface extending between the axial front end surface and the axial rear end surface,
- a front end extending from the axial front end surface toward the axial rear end surface,
- a rear end extending from the rear end surface toward the front end of the milling tool body, the rear end being configured for attachment to a machine,
- a first longitudinal centre axis extending between the axial front end surface and the axial rear end surface, the tool body being rotatable around the first longitudinal centre axis in a direction of rotation,
- at least two insert seats being entirely provided in the front end and distributed in a circumferential direction of the milling tool body, each of the at least two insert seats being configured to accommodate a cutting insert,
- a chip pocket being provided in front of each of the at least two insert seats in the direction of rotation and delimited by a chip pocket wall entirely provided in the front end;

wherein at least one coolant inlet and the at least one coolant outlet are being disposed in the milling tool body,
wherein a cooling duct system contained in the milling tool body is extending from the at least one coolant inlet to the at least one coolant outlet, wherein the cooling duct system is arranged such that coolant supplied via the at least one coolant inlet flows through the cooling duct system to the at least one coolant outlet without leaving the milling tool body along its way between the at least one coolant inlet and the at least one coolant outlet.

The chip pocket provided in front of each of the at least two insert seats and the at least two insert seats are entirely provided in the front end of the milling tool body. The front end of the milling tool body is delimited by the axial front end surface and extends toward the axial rear end surface, namely to an axial end of the chip pocket of each of the at least two insert seats.

According to the invention, the at least one coolant inlet is arranged in a first ring-shaped section of the peripheral mantle surface of the milling tool body, and the at least one coolant outlet is arranged in a second ring-shaped section of the peripheral mantle surface of the milling tool body. The first and the second ring-shaped section are separated from each other by an intermediate ring-shaped section of the peripheral mantle surface. The first ring-shaped section is flanked by a third ring-shaped section of the peripheral mantle surface such that the first ring-shaped section is axially located between the intermediate ring-shaped section and the third ring-shaped section when seen in a direction of the first longitudinal centre axis. The second ring-shaped section is flanked by a fourth ring-shaped section of the peripheral mantle surface such that the second ring-shaped section is axially located between the intermediate ring-shaped section and the fourth ring-shaped section when seen in the direction of the first longitudinal centre axis. The first, the second, the third, the fourth ring-shaped section and the intermediate ring-shaped section extend between the front end and the axial rear end surface, and each of the third, the fourth and the intermediate ring-shaped section is a surface of revolution created by a 360° rotation of a curve or a line around the first longitudinal centre axis C1 of the milling tool body, and is arranged to be a sealing surface and co-operate with a sealing ring arrangement. A surface of revolution is a surface created by a 360° rotation of a curve or a line around an axis of rotation. A circular cylindrical surface and a truncated conical surface are examples of surfaces of revolution. Each of the third, the fourth and the intermediate ring-shaped section preferably has mirror symmetry with regard to a plane perpendicular to the first longitudinal centre axis. Such an arrangement of the third, the fourth and the intermediate ring-shaped section decreases risks for movement of the associated sealing ring arrangement during use of the milling tool. More preferably, each of the third, the fourth and the intermediate ring-shaped section is circular cylindrical and has a centre axis that coincides with the first longitudinal centre axis of the milling tool body. The inventor has observed that such an arrangement of the third, the fourth and the intermediate ring-shaped section gives best results with regard to service life of the sealing ring arrangements, and it simplifies manufacturing of the milling tool body.

Such a sealing surface may be a dynamic sealing surface or a static sealing surface. By dynamic sealing surface is meant that there is a relative movement between the surface and the associated sealing ring arrangement. A dynamic sealing surface preferably has surface properties
0,05 ≤ Ra ≤ 0,20 µm,
0,40 ≤ Rz ≤ 1,60 µm,
0,63 ≤ Rmax ≤ 2,50 µm,
in order to prevent a premature wear of the associated sealing ring arrangement. Such a surface is preferably produced by grinding, honing, polishing, lapping or similar finishing method.

By static sealing surface is meant that there is no relative movement between the surface and the associated sealing ring arrangement. A static sealing surface preferably has surface properties
Ra ≤ 1,60 µm,
Rz ≤ 10,00 µm,
Rmax ≤ 16,00 µm.
Such a surface may be produced by turning.

Hence, each of the third, the fourth and the intermediate ring-shaped section of the peripheral mantle surface of the milling tool body has preferably surface properties
0,05 ≤ Ra ≤ 0,20 µm,
0,40 ≤ Rz ≤ 1,60 µm,
0,63 ≤ Rmax ≤ 2,50 µm.
if it is intended to be a dynamic sealing surface, or
Ra ≤ 1,60 µm,
Rz ≤ 10,00 µm,
Rmax ≤ 16,00 µm,
if it is intended to be a static sealing surface.

If a dynamic sealing surface has surface properties Ra < 0,05 µm, Rz < 0,40 µm, Rmax < 0,63 µm, lubrication between such a dynamic sealing surface and the co-operating sealing ring is unsatisfactory and leads to a premature wear of sealing ring that co-operates with that dynamic sealing surface, especially at higher temperatures typical for the applications where this milling tool is used. If a dynamic sealing surface has surface properties Ra >0,20 µm, Rz > 1,60 µm, Rmax > 2,50 µm, it may lead to a premature mechanical wear of sealing ring that co-operates with that dynamic sealing surface. If a static sealing surface has surface properties Ra > 1,60 µm, Rz > 10,00 µm, Rmax > 16,00 µm, it may lead to a premature mechanical wear and damages of sealing ring that co-operates with that static sealing surface.

The milling tool body according to the first aspect of the invention is a part of the milling tool and is arranged to carry cutting edges. The milling tool body and the milling tool are attachable to a milling machine via the rear end of the tool body. The milling tool furthermore comprises
- a coolant ring, the coolant ring comprises an outer periphery and an inner peripheral surface, the inner peripheral surface comprises a first, a second, a third, a fourth and an intermediate ring-shaped section, wherein each of the third, the fourth and the intermediate ring-shaped section of the inner peripheral surface of the coolant ring is a surface of revolution created by a 360° rotation of a curve or a line around a common second longitudinal centre axis, and is arranged to be a sealing surface and co-operate with a sealing ring arrangement,
   the coolant ring is arranged to be mounted onto the milling tool body such that the inner peripheral surface of the coolant ring encircle the peripheral mantle surface of the milling tool body and such that the first, the second, the third, the fourth and the intermediate ring-shaped section of the inner peripheral surface of the coolant ring face the first, the second, the third, the fourth and the intermediate ring-shaped section respectively of the peripheral mantle surface of the milling tool body,
- a first sealing ring arrangement arranged to be mounted between and co-operate with the third ring-shaped section of the peripheral mantle surface of the tool body and the third ring-shaped section of the inner peripheral surface of the coolant ring,
- a second sealing ring arrangement arranged to be mounted between and co-operate with the fourth ring-shaped section of the peripheral mantle surface of the tool body and the fourth ring-shaped section of the inner peripheral surface of the coolant ring,
- a third sealing ring arrangement arranged to be mounted between and co-operate with the intermediate ring-shaped section of the peripheral mantle surface of the tool body and the intermediate ring-shaped section of the inner peripheral surface of the coolant ring,
wherein the coolant ring, the first, the second and the third sealing ring arrangement are arranged such that when mounted onto the tool body
- the second longitudinal centre axis substantially coincides with the first longitudinal centre axis,
- a first annular coolant channel is formed between the first ring-shaped section of the peripheral mantle surface and the first ring-shaped section of the inner peripheral surface of the coolant ring, and sealed in axial direction by the first sealing ring arrangement and the third sealing ring arrangement,
- a second annular coolant channel is formed between the second ring-shaped section of the peripheral mantle surface and the second ring-shaped section of the inner peripheral surface of the coolant ring, and sealed in axial direction by the second sealing ring arrangement and the third sealing ring arrangement, and
- the milling tool body is rotatable relative the coolant ring,
wherein the coolant ring is provided with at least one coolant delivery channel arranged to be in communication with the first annular channel, wherein the coolant ring is furthermore provided with at least one coolant return channel arranged to be in communication with second annular coolant channel, each of the at least one coolant delivery channel extends from a coolant inlet in the outer periphery of the coolant ring to an orifice in the first ring-shaped section of the inner peripheral surface of the coolant ring, and each of the at least one coolant return channel extends from an orifice in the second ring-shaped section of the inner peripheral surface of the coolant ring to a coolant outlet in the outer periphery of the coolant ring.

The coolant ring comprises fastening means for fastening of the coolant ring to the external of the machine when the milling tool is mounted in the machine in order to prevent movement and rotation of the coolant ring. Hence, the coolant ring is a static coolant ring when the tool is mounted in the machine and when the coolant ring is fastened to the external of the machine via the fastening means of the coolant ring, and the milling tool body is rotatable inside the coolant ring upon application of a torque from the machine.

The above described design of the milling tool body implies that no tight tolerances are required in the interface between the milling tool body and the tool holder since coolant may be delivered to the coolant duct system, and returned from the coolant duct system when it has passed the coolant duct system, via the peripheral mantle surface, via the coolant ring. Since the first, the second, the third, the fourth ring-shaped section and the intermediate ring-shaped section extend between the front end and the axial rear end surface, coolant may be provided to and returned from a part of the peripheral mantle surface without disturbing the cutting process and chip evacuation and also without limiting possibilities to attach the milling tool body to a machine, directly or via a tool holder, in a standardized way. No special tool holder is required and same tool holder may be used for tools with different numbers of cutting insert.

Since the first ring-shaped section is flanked by the third ring-shaped section, on one axial side, and the intermediate ring-shaped section on the other axial side, since the second ring-shaped section is flanked by the fourth ring-shaped section, on one axial side, and the intermediate ring-shaped section on the other axial side, and since each of the third, the fourth and the intermediate ring-shaped section of the peripheral mantle surface of the milling tool body is a surface of revolution, has a centre axis that coincides with the first longitudinal centre axis of the milling tool body and is arranged to be a sealing surface and co-operate with a sealing ring arrangement, coolant may be delivered to the coolant duct system and returned from it without leakage. Such an arrangement implies also that the system is not sensitive for an increase of the tool diameter, tool bending and different number of cutting inserts.

According to an embodiment of the invention,
- the at least one coolant inlet is arranged in a first groove in the milling tool body between the third ring-shaped section and the intermediate ring-shaped section, the first groove is preferably a first annular groove, and/or
- the at least one coolant outlet is arranged in a second groove in the milling tool body arranged between the fourth ring-shaped section and the intermediate ring-shaped section, the second groove is preferably a second annular groove.

Thanks to this, a flow of coolant may be increased in the first annular coolant channel formed between the first ring-shaped section of the peripheral mantle surface and the first ring-shaped section of the inner peripheral surface of the coolant ring and a volume of the first annular coolant channel may be increased, and/or a flow of coolant may be increased in the second annular channel formed between the second ring-shaped section of the peripheral mantle surface and the second ring-shaped section of the inner peripheral surface of the coolant ring and a volume of the second annular coolant channel may be increased. Manufacturing of the coolant ring is also facilitated.

According to another embodiment of the invention, the coolant duct system extends partly within the front end of the milling tool body, preferably intersecting a first plane that is perpendicular to the first longitudinal rotation centre axis, wherein the first plane intersects each chip pocket provided in front of each of the at least two insert seats and/or wherein the first plane intersects each of the at least two insert seats. In this way, a more efficient cooling of the front end of the milling tool body is achieved.

According to a further one embodiment of the invention, each of the third, the fourth and the intermediate ring-shaped section of the peripheral mantle surface of the milling tool body is circular cylindrical and they have substantially same diameter. Thanks to this arrangement it is easier to manufacture the milling tool body and the requirements for concentricity and tolerances of the third, the fourth and the intermediate ring-shaped section of the peripheral mantle surface of the milling tool body are easier to achieve. The third, the fourth and the intermediate ring-shaped section are substantially arranged on a first common imaginary cylinder, i.e. the third, the fourth and the intermediate ring-shaped section are arranged on the first common imaginary cylinder within tolerances. Preferably, the milling tool body is furthermore arranged such that the first common imaginary cylinder completely encloses the milling tool body in a region from the axial rear end surface to one of the third and the fourth ring-shaped section that is arranged further away from the axial rear end surface than the other one of the third and the fourth ring-shaped section. Hence, no part of the milling tool body protrudes radially outward from the first common imaginary cylinder in the region from the axial rear end surface to one of the third and the fourth ring-shaped section that is arranged further away from the axial rear end surface than the other one of the third and the fourth ring-shaped section. Thanks to this, the coolant ring may be done in one piece and it may be mounted onto the milling tool body in an easy way. As an alternative or as a complement to this, the first common imaginary cylinder may completely enclose the milling tool body in a region from the axial front end surface to one of the third and the fourth ring-shaped sections that is arranged further away from the axial front end surface than the other one of the third and the fourth ring-shaped section.

According to another embodiment of the invention, the at least one coolant inlet is a plurality of coolant inlets, the at least one coolant outlet is a plurality of coolant outlets, and the coolant duct system comprises a plurality of coolant channels. Each coolant channel of the plurality of coolant channels extends from only one coolant inlet of the plurality of coolant inlets to only one coolant outlet of the plurality of the coolant outlets. The coolant inlets of the plurality of coolant inlets are preferably evenly or preferably substantially evenly distributed in a circumferential direction of the milling tool body. The coolant outlets of the plurality of coolant outlets are preferably evenly or preferably substantially evenly distributed in a circumferential direction of the milling tool body. The coolant channels of the plurality of coolant channels are preferably evenly or preferably substantially evenly distributed in a circumferential direction of the milling tool body. The number of coolant channels in the plurality of coolant channels may be equal to the number of the at least two insert seats. In an alternative embodiment, the number of coolant channels in the plurality of coolant channels is equal to half the number of the at least two insert seats.

According to a second aspect of the invention, said object is achieved by means of a milling tool comprising a milling tool body according to the first aspect of the invention. The milling tool furthermore comprises:
- a coolant ring, the coolant ring comprises an outer periphery and an inner peripheral surface, the inner peripheral surface comprises a first, a second, a third, a fourth and an intermediate ring-shaped section, wherein each of the third, the fourth and the intermediate ring-shaped section is a surface of revolution created by a 360° rotation of a curve or a line around a common second longitudinal centre axis, and is arranged to be a sealing surface and co-operate with a sealing ring arrangement,
   the coolant ring is arranged to be mounted onto the milling tool body such that the inner peripheral surface of the coolant ring encircle the peripheral mantle surface of the milling tool body and such that the first, the second, the third, the fourth and the intermediate ring-shaped section of the inner peripheral surface of the coolant ring face the first, the second, the third, the fourth and the intermediate ring-shaped section respectively of the peripheral mantle surface of the milling tool body,
- a first sealing ring arrangement arranged to be mounted between and co-operate with the third ring-shaped section of the peripheral mantle surface of the tool body and the third ring-shaped section of the inner peripheral surface of the coolant ring,
- a second sealing ring arrangement arranged to be mounted between and co-operate with the fourth ring-shaped section of the peripheral mantle surface of the tool body and the fourth ring-shaped section of the inner peripheral surface of the coolant ring,
- a third sealing ring arrangement arranged to be mounted between and co-operate with the intermediate ring-shaped section of the peripheral mantle surface of the tool body and the intermediate ring-shaped section of the inner peripheral surface of the coolant ring,
   wherein the coolant ring, the first, the second and the third sealing ring arrangement are arranged such that when mounted onto the tool body
   - the second longitudinal centre axis substantially coincides with the first longitudinal centre axis,
   - a first annular coolant channel is formed between the first ring-shaped section of the peripheral mantle surface and the first ring-shaped section of the inner peripheral surface of the coolant ring, and sealed in axial direction by the first sealing ring arrangement and the third sealing ring arrangement,
   - a second annular coolant channel is formed between the second ring-shaped section of the peripheral mantle surface and the second ring-shaped section of the inner peripheral surface of the coolant ring, and sealed in axial direction by the second sealing ring arrangement and the third sealing ring arrangement, and
   - the milling tool body is rotatable relative the coolant ring,
wherein the coolant ring is provided with at least one coolant delivery channel arranged to be in communication with the first annular channel, wherein the coolant ring is furthermore provided with at least one coolant return channel arranged to be in communication with second annular coolant channel, each of the at least one coolant delivery channel extends from a coolant inlet in the outer periphery of the coolant ring to an orifice in the first ring-shaped section of the inner peripheral surface of the coolant ring, and each of the at least one coolant return channel extends from an orifice in the second ring-shaped section of the inner peripheral surface of the coolant ring to a coolant outlet in the outer periphery of the coolant ring.

The coolant ring comprises fastening means for fastening of the coolant ring to the external of the machine when the milling tool is mounted in the machine in order to prevent movement and rotation of the coolant ring. Hence, the coolant ring is a static coolant ring when the tool is mounted in the machine and when the coolant ring is fastened to the external of the machine via the fastening means of the coolant ring, and the milling tool body is rotatable inside the coolant ring upon application of a torque from the machine.

The second longitudinal centre axis is a common longitudinal centre axis for the third, the fourth and the intermediate ring-shaped section of the inner peripheral surface of the coolant ring.

Each of the third, the fourth and the intermediate ring-shaped section of the inner peripheral surface of the coolant ring preferably has mirror symmetry with regard to a plane perpendicular to the second longitudinal centre axis. Such an arrangement of the third, the fourth and the intermediate ring-shaped section of the inner peripheral surface of the coolant ring decreases risks for movement of the associated sealing ring arrangement during use of the milling tool. More preferably, each of the third, the fourth and the intermediate ring-shaped section of the inner peripheral surface of the coolant ring is circular cylindrical and has a centre axis that coincides with the second longitudinal centre axis. The inventor has observed that such an arrangement of the third, the fourth and the intermediate ring-shaped section of the inner peripheral surface of the coolant ring gives best results with regard to service life of the sealing ring arrangements, and it simplifies manufacturing of the coolant ring. Each of the third, the fourth and the intermediate ring-shaped section of the inner peripheral surface of the coolant ring has preferably surface properties
0,05 ≤ Ra ≤ 0,20 µm,
0,40 ≤ Rz ≤ 1,60 µm,
0,63 ≤ Rmax ≤ 2,50 µm.
if it is intended to be a dynamic sealing surface, or
Ra ≤ 1,60 µm,
Rz ≤ 10,00 µm,
Rmax ≤ 16,00 µm,
if it is intended to be a static sealing surface.

The first sealing ring arrangement is arranged to be mounted between and co-operate with the third ring-shaped section of the peripheral mantle surface of the tool body and the third ring-shaped section of the inner peripheral surface of the coolant ring. One of the third ring-shaped section of the peripheral mantle surface of the tool body and the third ring-shaped section of the inner peripheral surface of the coolant ring is preferably a static sealing surface and the other one is a dynamic sealing surface.

The second sealing ring arrangement is arranged to be mounted between and co-operate with the fourth ring-shaped section of the peripheral mantle surface of the tool body and the fourth ring-shaped section of the inner peripheral surface of the coolant ring. One of the fourth ring-shaped section of the peripheral mantle surface of the tool body and the fourth ring-shaped section of the inner peripheral surface of the coolant ring is preferably a static sealing surface and the other one is a dynamic sealing surface.

The third sealing ring arrangement is arranged to be mounted between and co-operate with the intermediate ring-shaped section of the peripheral mantle surface of the tool body and the intermediate ring-shaped section of the inner peripheral surface of the coolant ring. One of the intermediate ring-shaped section of the peripheral mantle surface of the tool body and the intermediate ring-shaped section of the inner peripheral surface of the coolant ring is preferably a static sealing surface and the other one is a dynamic sealing surface.

Preferably but not necessarily, the third, the fourth and the intermediate ring-shaped section of the inner peripheral surface of the coolant ring are of the same kind, i.e. either static sealing surfaces or dynamic sealing surfaces.

Preferably but not necessarily, the third, the fourth and the intermediate ring-shaped section of the peripheral mantle surface of the milling tool body are of the same kind, i.e. either static sealing surfaces or dynamic sealing surface, preferably also of different kind compared to the third, the fourth and the intermediate ring-shaped section of the inner peripheral surface of the coolant ring.

According to another embodiment, the coolant ring is arranged with a first, a second and a third annular groove in the inner peripheral surface of the coolant ring, the first, the second and the third annular groove are arranged to accommodate the first, the second and the third sealing ring arrangement respectively, when the coolant ring, the first, the second and the third sealing ring arrangement are mounted onto the tool body. In this way, assembling of the tool is facilitated. The first, the second and the third sealing ring arrangement may be placed in the first, the second and the third annular groove respectively in the inner peripheral surface of the coolant ring, and the coolant ring together with the first, the second and the third sealing ring arrangement is put onto the milling tool body in a subsequent step. When the first, the second and the third sealing ring arrangement is placed in the first, the second and the third annular groove respectively in the inner peripheral surface of the coolant ring, each of the first, the second and the third sealing ring arrangement protrudes from the associated annular groove radially inwardly toward the second longitudinal centre axis in order to co-operate with the third, the fourth and the intermediate ring-shaped section respectively of the peripheral mantle surface of the tool body when the tool is assembled. In this embodiment, each of the first, the second and the third annular groove respectively in the inner peripheral surface of the coolant ring has a bottom wall and two side walls. At least a part of the bottom wall of the first annular groove constitutes the third ring-shaped section of the inner peripheral surface of the coolant ring. At least a part of the bottom wall of the second annular groove constitutes the fourth ring-shaped section of the inner peripheral surface of the coolant ring. At least a part of the bottom wall of the third annular groove constitutes the intermediate ring-shaped section of the inner peripheral surface of the coolant ring. Each of the third, the fourth and the intermediate ring-shaped section of the inner peripheral surface of the coolant ring has preferably surface properties
Ra ≤ 1,60 µm,
Rz ≤ 10,00 µm,
Rmax ≤ 16,00 µm,
and is intended to be a static sealing surface. The side walls of each of the first, the second and the third annular groove in the inner peripheral surface of the coolant ring preferably have also these surface properties. The entire bottom wall of each of the first, the second and the third annular groove in the inner peripheral surface of the coolant ring preferably have also these surface properties. Each of the third, the fourth and the intermediate ring-shaped section respectively of the peripheral mantle surface of the tool body has preferably surface properties 0,05 ≤ Ra ≤ 0,20 µm,
0,40 ≤ Rz ≤ 1,60 µm,
0,63 ≤ Rmax ≤ 2,50 µm.
and is intended to be a dynamic sealing surface. In this embodiment, each of the first, the second and the third sealing ring arrangement is static in the same way as the coolant ring is when the milling tool is in use.

In an alternative embodiment, the milling tool body is arranged with a third, a fourth and a fifth annular groove in the peripheral mantle surface, wherein the third, the fourth and the fifth annular groove of the peripheral mantle surface of the milling tool body are arranged to accommodate the first, the second and the third sealing ring arrangement respectively, when the coolant ring, the first, the second and the third sealing ring arrangement are mounted onto the tool body. In this way, assembling of the tool is facilitated. The first, the second and the third sealing ring arrangement may be placed in the third, the fourth and the fifth annular groove respectively in the peripheral mantle surface of the milling tool body, and in a subsequent step the coolant ring is then put onto the milling tool body where the first, the second and the third coolant ring arrangement are already mounted. When the first, the second and the third sealing ring arrangement is placed in the third, the fourth and the fifth annular groove respectively in the peripheral mantle surface of the milling tool body, each of the first, the second and the third sealing ring arrangement protrudes from the associated annular groove in the peripheral mantle surface of the milling tool body radially outwardly away from the first longitudinal axis of the milling tool body in order to be in contact and co-operate with the third, the fourth and the intermediate ring-shaped section respectively of the inner peripheral surface of the coolant ring when the tool is assembled. In this embodiment, each of the third, the fourth and the fifth annular groove respectively in the peripheral mantle surface of the milling tool body has a bottom wall and two side walls. At least a part of the bottom wall of the third annular groove constitutes the third ring-shaped section of the peripheral mantle surface of the milling tool body. At least a part of the bottom wall of the second annular groove constitutes the fourth ring-shaped section of the peripheral mantle surface of the milling tool body. At least a part of the bottom wall of the third annular groove constitutes the intermediate ring-shaped section of the peripheral mantle surface of the milling tool body. Each of the third, the fourth and the intermediate ring-shaped section of the peripheral mantle surface of the milling tool body has preferably surface properties
Ra ≤ 1,60 µm,
Rz ≤ 10,00 µm,
Rmax ≤ 16,00 µm,
and is intended to be a static sealing surface. The side walls of each of the third, the fourth and the fifth annular in the peripheral mantle surface of the milling tool body preferably have also these surface properties. The entire bottom wall of each of the third, the fourth and the fifth annular in the peripheral mantle surface of the milling tool body preferably have also these surface properties. Each of the third, the fourth and the intermediate ring-shaped section respectively of the inner peripheral surface of the coolant ring has preferably surface properties
0,05 ≤ Ra ≤ 0,20 µm,
0,40 ≤ Rz ≤ 1,60 µm,
0,63 ≤ Rmax ≤ 2,50 µm.
and is intended to be a dynamic sealing surface. In this embodiment, each of the first, the second and the third sealing ring arrangement rotates together with the milling tool body when the milling tool is in use.

According to another embodiment, each of the first, the second and the third sealing ring arrangement comprises a first sealing ring and a second sealing ring, wherein the first and the second sealing ring of each of the first, the second and the third sealing ring arrangement are concentric to each other such that one of them has a smaller diameter and is arranged radially inward from the other one and closer to the first longitudinal centre axis when the coolant ring, the first, the second and the third sealing ring arrangement are mounted onto the milling tool body.

According to a further one embodiment, the first sealing ring of each of the first, the second and the third sealing ring arrangement is of hard plastic, preferably of polytetrafluoroethylene PTFE, and the second sealing ring of each of the first, the second and the third sealing ring arrangement is of elastomer, preferably of fluorinated propylene monomer FPM.

According to a further one embodiment of the milling tool, the coolant ring is arranged with a first, a second and a third annular groove in the inner peripheral surface of the coolant ring, the first, the second and the third annular groove are arranged to accommodate the first, the second and the third sealing ring arrangement respectively, when the coolant ring, the first, the second and the third sealing ring arrangement are mounted onto the tool body, wherein the first and the second sealing ring of each of the first, the second and the third sealing ring arrangement are arranged such that the first sealing ring has a smaller diameter than the second sealing ring and is in contact and co-operates with the peripheral mantle surface of the milling tool body when the coolant ring, the first, the second and the third sealing ring arrangement are mounted onto the tool body. The first sealing ring of each of the first, the second and the third sealing ring is of hard plastic, preferably of polytetrafluoroethylene PTFE, and the second sealing ring of each of the first, the second and the third sealing ring is of elastomer, preferably of fluorinated propylene monomer FPM.

When the milling tool is assembled, the first and second sealing ring of the first sealing ring arrangement are accommodated in the first annular groove in the inner peripheral surface of the coolant ring, such that the second sealing ring is sandwiched between the bottom wall of the first annular groove in the coolant ring and the first sealing ring. The first sealing ring protrudes from the first annular groove radially inwardly toward the second longitudinal axis and co-operates with the third ring-shaped section of the peripheral mantle surface of the tool body. The first sealing ring is sandwiched between the second sealing ring and the third ring-shaped section of the peripheral mantle surface of the tool body. The second sealing ring is compressed by the first sealing ring during assembling of the milling tool and applies a bias on the first sealing ring when the milling tool is assembled.

When the milling tool is assembled, the first and second sealing ring of the second sealing ring arrangement are accommodated in the second annular groove in the inner peripheral surface of the coolant ring, such that the second sealing ring is sandwiched between the bottom wall of the second annular groove in the coolant ring and the first sealing ring. The first sealing ring protrudes from the second annular groove radially inwardly toward the second longitudinal axis and co-operates with the fourth ring-shaped section of the peripheral mantle surface of the tool body. The first sealing ring is sandwiched between the second sealing ring and the fourth ring-shaped section of the peripheral mantle surface of the tool body. The second sealing ring is compressed by the first sealing ring during assembling of the milling tool and applies a bias on the first sealing ring when the milling tool is assembled.

When the milling tool is assembled, the first and second sealing ring of the third sealing ring arrangement are accommodated in the third annular groove in the inner peripheral surface of the coolant ring, such that the second sealing ring is sandwiched between a bottom wall of the third annular groove in the coolant ring and the first sealing ring. The first sealing ring protrudes from the third annular groove radially inwardly toward the second longitudinal axis and co-operates with the intermediate ring-shaped section of the peripheral mantle surface of the tool body. The first sealing ring is sandwiched between the second sealing ring and the intermediate ring-shaped section of the peripheral mantle surface of the tool body. The second sealing ring is compressed by the first sealing ring during assembling of the milling tool and applies a bias on the first sealing ring when the milling tool is assembled.

In this way, assembling of the tool is facilitated and good service life of the sealing ring arrangements are achieved. The second ring of each of the first, the second and the third sealing ring arrangement is of elastomer and may be compressed during mounting. Furthermore, the first sealing ring of each of the first, the second and the third sealing ring arrangement is of hard plastic, preferably of polytetrafluoroethylene PTFE, and has good durability and low friction.

It has been observed that best performance when it comes to service life and coolant pressure that the first, the second and the third sealing ring arrangements can withstand is achieved when the first sealing ring of each of the first, the second and the third sealing ring arrangement is of hard plastic, especially when it is of polytetrafluoroethylene PTFE, and when the second sealing ring of each of the first, the second and the third sealing ring arrangement is of elastomer, especially when it is of fluorinated propylene monomer FPM, and when the first sealing ring of each of the first, the second and the third sealing ring arrangement co-operates with a dynamic sealing surface with surface properties
0,05 ≤ Ra ≤ 0,20 µm,
0,40 ≤ Rz ≤ 1,60 µm,
0,63 ≤ Rmax ≤ 2,50 µm.
and when the second sealing ring of each of the first, the second and the third sealing ring arrangement co-operates with a static sealing surface with surface properties
Ra ≤ 1,60 µm,
Rz ≤ 10,00 µm,
Rmax ≤ 16,00 µm.

When assembling the milling tool, the first, the second and the third sealing ring arrangement may be placed in the first, the second and the third annular groove respectively in the inner peripheral surface of the coolant ring, and the coolant ring together with the first, the second and the third sealing ring arrangement is put onto the milling tool body in a subsequent step. Between these two steps, the first sealing ring of one or two or each of the first, the second and the third sealing ring arrangement may be machined, i.e. turned, to be given a predefined inner diameter.

According to another embodiment of the invention, the milling tool body is arranged with a third, a fourth and a fifth annular groove in the peripheral mantle surface, wherein the third, the fourth and the fifth annular groove are arranged to accommodate the first, the second and the third sealing ring arrangement respectively, when the coolant ring, the first, the second and the third sealing ring arrangement are mounted onto the tool body, wherein the first and the second sealing ring of each of the first, the second and the third sealing ring arrangement are arranged such that the first sealing ring has a larger diameter than the second sealing ring and is in contact and co-operates with inner peripheral surface of the coolant ring when the coolant ring, the first, the second and the third sealing ring arrangement are mounted onto the tool body.

When the milling tool is assembled, the first and second sealing ring of the first sealing ring arrangement are accommodated in the third annular groove in the milling tool body, such that the second sealing ring is sandwiched between a bottom wall of the third annular groove and the first sealing ring. The first sealing ring protrudes from the third annular groove radially outward away from the first longitudinal axis and co-operates with the third ring-shaped section of the inner peripheral surface of the coolant ring. The first sealing ring is sandwiched between the second sealing ring and the third ring-shaped section of the inner peripheral surface of the coolant ring. The second sealing ring is compressed by the first sealing ring during assembling of the milling tool and applies a bias on the first sealing ring when the milling tool is assembled.

When the milling tool is assembled, the first and second sealing ring of the second sealing ring arrangement are accommodated in the fourth annular groove in the milling tool body, such that the second sealing ring is sandwiched between a bottom wall of the fourth annular groove and the first sealing ring. The first sealing ring protrudes from the fourth annular groove of the milling tool body radially outward away from the first longitudinal axis and co-operates with the fourth ring-shaped section of the inner peripheral surface of the coolant ring. The first sealing ring is sandwiched between the second sealing ring and the fourth ring-shaped section of the inner peripheral surface of the coolant ring. The second sealing ring is compressed by the first sealing ring during assembling of the milling tool and applies a bias on the first sealing ring when the milling tool is assembled.

When the milling tool is assembled, the first and second sealing ring of the third sealing ring arrangement are accommodated in the fifth annular groove in the milling tool body, such that the second sealing ring is sandwiched between a bottom wall of the fifth annular groove and the first sealing ring. The first sealing ring protrudes from the fifth annular groove of the milling tool body radially outward away from the first longitudinal axis and co-operates with the intermediate ring-shaped section of the inner peripheral surface of the coolant ring. The first sealing ring is sandwiched between the second sealing ring and the intermediate ring-shaped section of the inner peripheral surface of the coolant ring. The second sealing ring is compressed by the first sealing ring during assembling of the milling tool and applies a bias on the first sealing ring when the milling tool is assembled.

In this way, assembling of the tool is facilitated and good service life of the sealing ring arrangements are achieved. The second ring of each of the first, the second and the third sealing ring arrangement is of elastomer and may be compressed during mounting. Furthermore, the first sealing ring of each of the first, the second and the third sealing ring arrangement is of hard plastic, preferably of polytetrafluoroethylene PTFE, and has good durability and low friction.

When assembling the milling tool, the first, the second and the third sealing ring arrangement may be placed in the third, the fourth and the fifth annular groove respectively in the peripheral mantle surface of the milling tool body. The coolant ring is put onto the milling tool body in a subsequent step. Between these two steps, the first sealing ring of one or two or each of the first, the second and the third sealing ring arrangement may be machined, i.e. turned, to be given a predefined outer diameter.

According to another embodiment of the invention, the coolant ring is provided with an annular surface at an axial end portion of the coolant ring, the annular surface is arranged to abut an annular surface provided on the milling tool body when the coolant ring, the first, the second and the third sealing ring arrangement are mounted onto the tool body in order to facilitate mounting of the coolant ring onto the milling tool body in right longitudinal, i.e. axial, position. The annular surface provided on the milling tool body has its center point substantially arranged on the first longitudinal centre axis, and the annular surface provided on the coolant ring has its center point substantially arranged on the second longitudinal centre axis. The annular surface of the coolant ring may be an axial end surface of the coolant ring. The annular surface may be a surface on a flange provided on the coolant ring.

According to an embodiment, the coolant ring, the first, the second and the third sealing ring arrangement are arranged such that the coolant ring is centered in relation to the milling tool body by the first, the second and the third sealing ring arrangement such that the second longitudinal centre axis substantially coincides with the first longitudinal centre axis when the coolant ring, the first, the second and the third sealing ring arrangement are mounted onto the tool body. This simplifies the design of the milling tool body and the coolant ring. In this way, each of the first, the second and the third sealing ring arrangement is compressed more evenly between the milling tool body and the coolant ring in each angular segment of it.

According to a further one embodiment, when the coolant ring, the first, the second and the third sealing ring arrangement are mounted onto the tool body, a bearing function between the coolant ring and the milling tool body during a rotary motion of the milling tool body inside the coolant ring is provided by the first, the second and the third sealing ring arrangement. This simplifies the design of the milling tool body and the coolant ring. Since no other bearings are required, the coolant ring and the milling tool body may be given a more compact design and a shorter length.

According to an embodiment, the coolant ring has lower density than the milling tool body.

According to a third aspect of the invention, said object is achieved by means of a system for delivering a coolant, the system comprising a milling tool according to the invention and connected to the system, wherein the system furthermore comprises a coolant delivering unit connected to the milling tool via the coolant inlet of the at least one coolant delivery channel, and wherein the system comprises a coolant return unit connected to the milling tool via the coolant outlet of the at least one coolant return channel.

### BRIEF DESCRIPTION OF THE DRAWINGS

With reference to the appended drawings, a specific description of embodiments of the invention cited as examples follows below. In the drawings:
- Fig 1a and 1b: are perspective views from different directions of the milling tool according to an embodiment of the present invention,
- Fig 2: is a lateral view of the milling tool of Fig 1a and 1b,
- Fig 3: is an exploded lateral view of the milling tool of Fig 1a and 1b, with a sectional view of the coolant ring,
- Fig 4a and 4b: are exploded perspective views from different directions of the milling tool of Fig 1a and 1b,
- Fig 5: is a lateral view of the milling tool of Fig 1a and 1b,
- Fig 5a: is a cut according to the line Va-Va in Fig 5,
- Fig 5b: is a cut according to the line Vb-Vb in Fig 5,
- Fig 5c: is a cut according to the line Vc-Vc in Fig 5,
- Fig 6: is a planar view of the milling tool of Fig 1a and 1b,
- Fig 6a: is a cut according to the line Vla-Vla in Fig 6,
- Fig 6b: is a cut according to the line Vlb-Vlb in Fig 6,
- Fig 7: is an enlarged partial view of the cut in Fig 6b,
- Fig 8: is an exploded view of the partial view in Fig 7,
- Fig 9: is a detail enlargement of a portion of Fig 1b, where the cartridge, the cutting insert and the wedge for fastening of the cartridge are shown separated from the milling tool body,
- Fig 10: is an exploded view of the cartridge, the cutting insert and the wedge for fastening of the cartridge illustrated in Fig 9.

### DETAILED DESCRIPTION OF EMBODIMENTS OF THE INVENTION

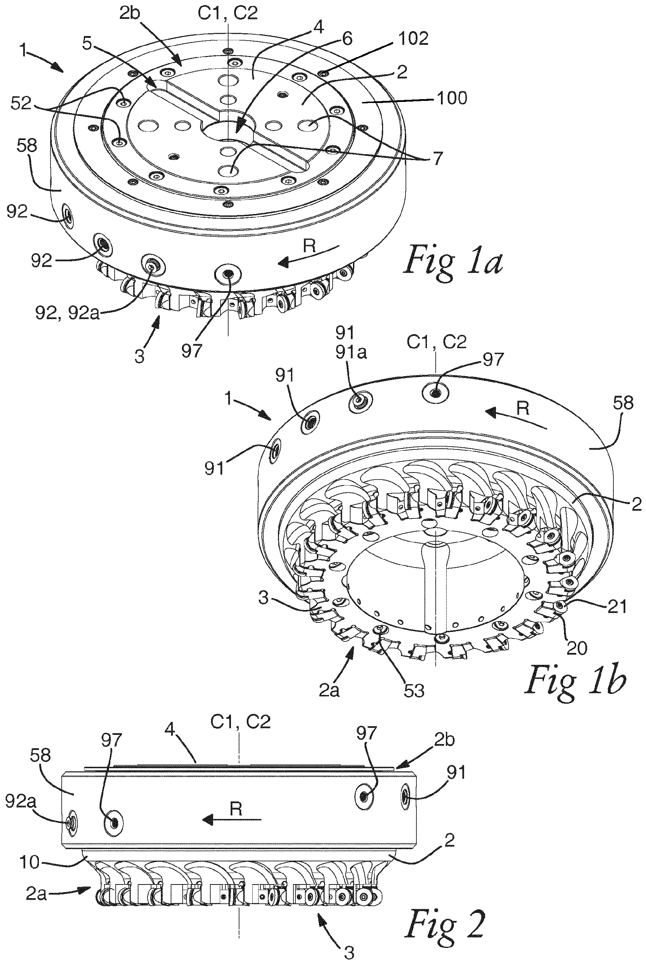

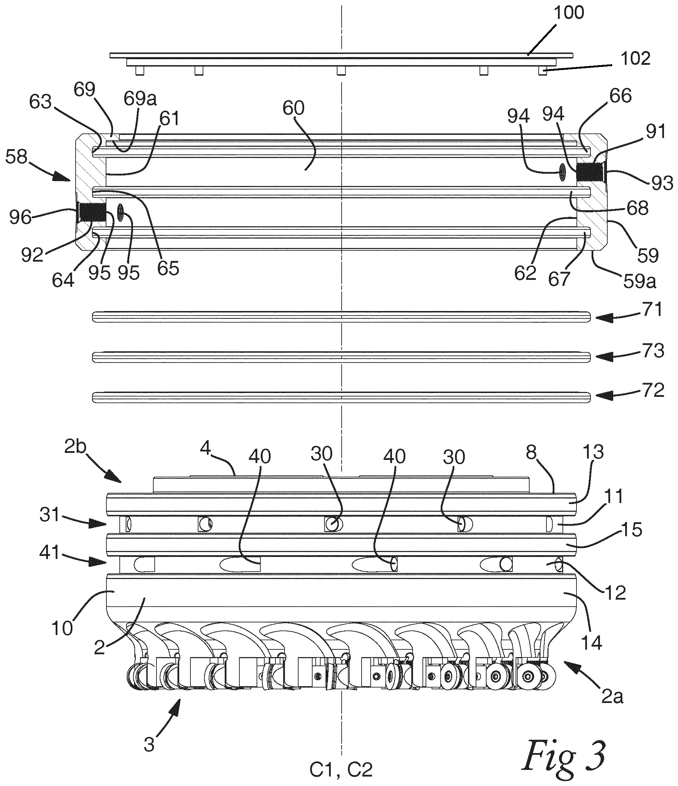

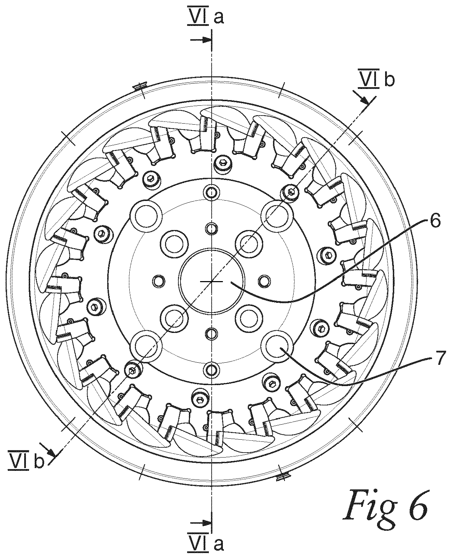

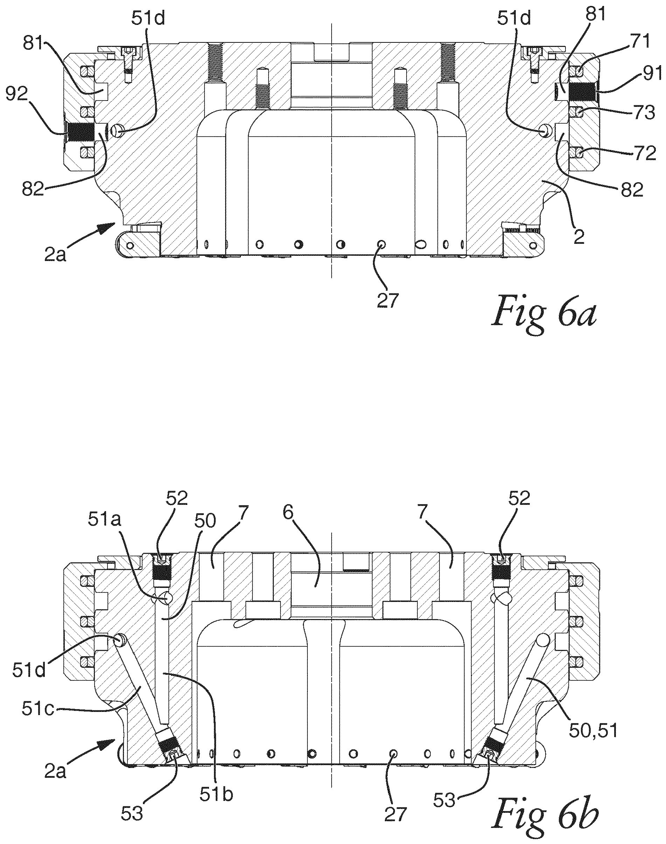

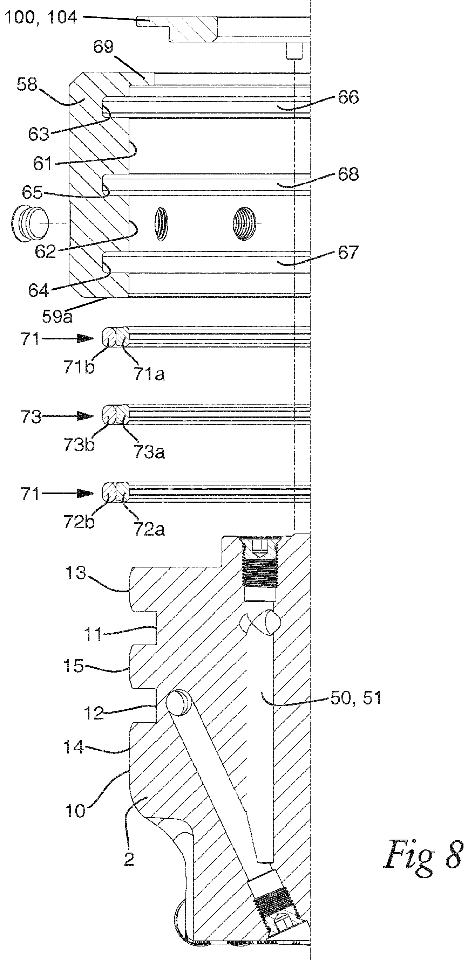

An embodiment of a milling tool 1 according to the invention is illustrated in Figs 1-9. The milling tool 1 comprises a milling tool body 2, a coolant ring 58 and three coolant ring arrangements 71, 72 and 73 (Fig 3). Figs 3-4 illustrate the milling tool 1 when the milling tool body 2, the coolant ring 58 and the three coolant ring arrangements 71, 72 and 73 are separated from each other, and Figs 1-2 illustrate the milling tool 1 when it is assembled. Figs 6-7 illustrate the relative position of the milling tool body 2, the coolant ring 58 and the three coolant ring arrangements 71, 72 and 73 when the milling tool is in assembled state.

The milling tool body 2 comprises an axial front end surface 3, an axial rear end surface 4 opposite to the axial front end surface 3, a peripheral mantle surface 10 that extends between the axial front end surface 3 and the axial rear end surface 4, and a first longitudinal centre axis C1 that extends between the axial front end surface 3 and the axial rear end surface 4. The milling tool body 2 is rotatable around the axis C1 in a direction of rotation R. The first longitudinal centre axis C1 is also an axis of rotation of the milling tool body 2, and the direction of rotation R is also an intended direction of rotation of the milling tool body 2 when the milling tool 1 is in use.

The milling tool body has a front end 2a and a rear end 2b. The front end 2a extends from the axial front end surface 3 toward the axial rear end surface 4. The rear end 2b extends from the axial rear end surface 4 toward the front end 2a and is configured for attachment of the milling tool 1, directly or via an intermediate tool holder, to a rotating spindle or the similar of a machine, for instance a milling machine. The rear end surface 4 is a planar surface that abuts the rotating spindle, or the intermediate tool holder if the milling tool, as the case may be, is attached to the spindle via the tool holder, to decide an axial position of the milling tool in relation to the machine. The rear end surface 4 is perpendicular to the first longitudinal axis C1.

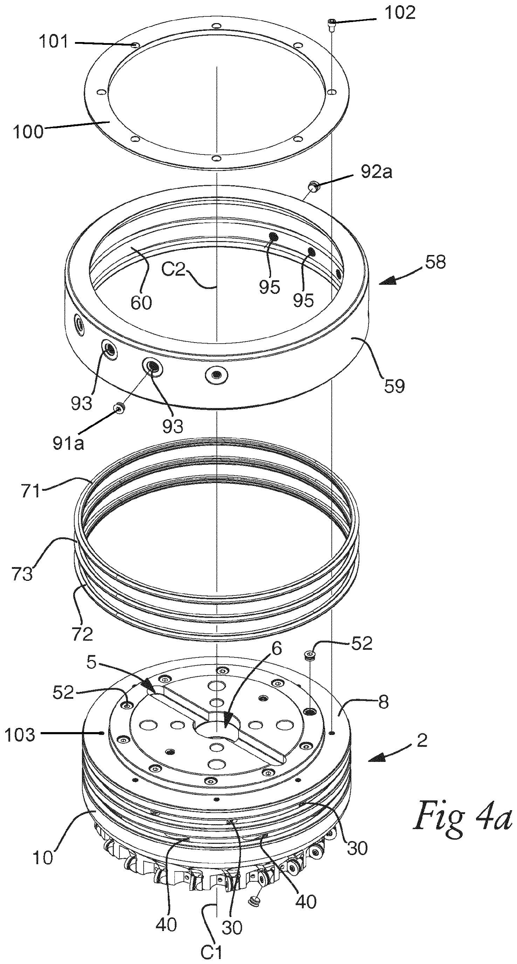

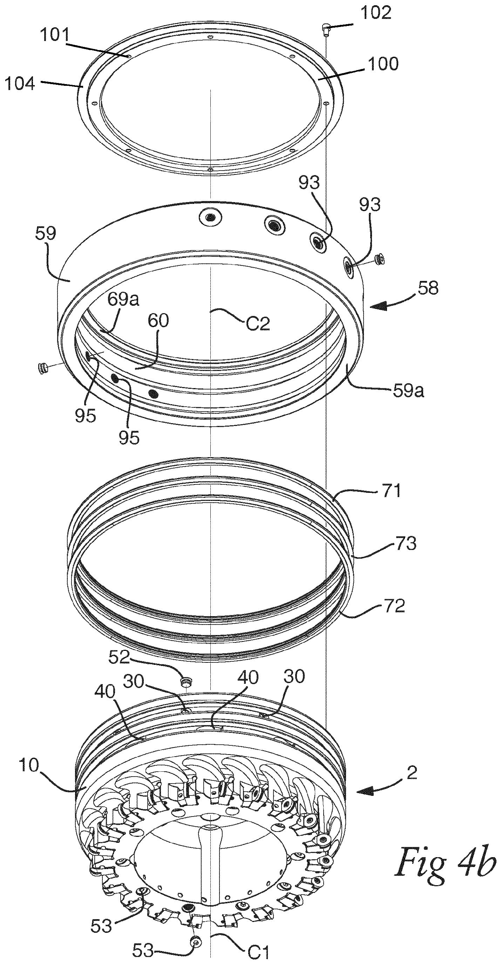

In the illustrated example, the milling tool body 2 is provided with a driving slot 5 or keyway 5 that is recessed in relation to the rear end surface 4, as can best be seen in Figs 1a and 4a. The driving slot 5 is arranged to co-operate with a corresponding driving key of the spindle, or a corresponding driving key of the tool holder, in order to transfer torque from the machine to the milling tool body 2. The milling tool body comprises a central cylindrical through hole 6. The central through hole 6 may co-operate with a cylindrical shaft portion of the spindle or the tool holder to center the milling tool body in relation to the spindle. The milling tool 1 is fastened to the spindle by screws (not shown) inserted through the holes 7. The illustrated embodiment has four holes 7 evenly distributed around the first longitudinal centre axis C1. Said screws co-operate with threaded holes in the spindle or in the tool holder. The milling tool may also be fastened by a screw through the central through hole 6, which is more preferable when the milling tool has a smaller diameter.

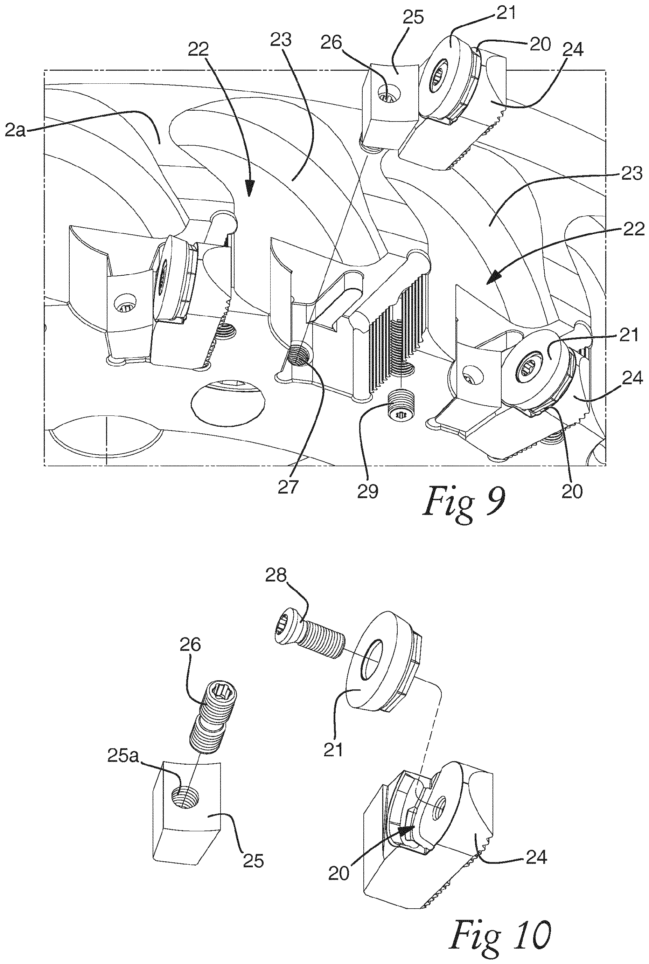

The illustrated embodiment has 20 insert seats distributed in a circumferential direction of the milling tool body. Each of these 20 insert seats are configured to accommodate a cutting insert 21. A chip pocket 22 is provided in front of each of the insert seats 20 in the direction of rotation R and delimited by a chip pocket wall 23 (Fig 9). The insert seats 20, the chip pockets 22 and the chip pocket walls 23 are entirely provided in the front end 2a of the milling tool body 2. Hence, the front end 2a of the milling tool body has a function to carry cutting edges which are arranged on the cutting inserts 21. The front end 2a serves also for chip evacuation.

As can best be seen in Figs 9 and 10, each of the at least insert seats 20 is formed in a replaceable cartridge 24 mounted into the milling tool body 2 by means of a clamping wedge 25 and a clamping screw 26. The clamping screw 26 has a double thread and co-operates with a threaded hole 25a in the cartridge 24 and a threaded hole 27 in the milling tool body 2. Such clamping wedge and clamping screw, as well as their function, are known in the art. The cutting insert 21 is clamped in the insert seat 20 by means of an insert screw 28. The cartridge 24 is axially adjustable in the milling tool body 2 by means of an adjustment screw 29. Each threaded hole 27 is a through (Figs 6a-6b).

The milling tool body 2 is provided with a cooling duct system 50 for cooling the milling tool body 2 and the milling tool 1. The cooling duct system 50 is contained in the milling tool body and extends from at least one coolant inlet 30 to at least one coolant outlet 40. The coolant duct system 50 is arranged such that coolant supplied via the at least one coolant inlet 30 flows through the cooling duct system 50 to the at least one coolant outlet 40 without leaving the milling tool body 2 along this way.

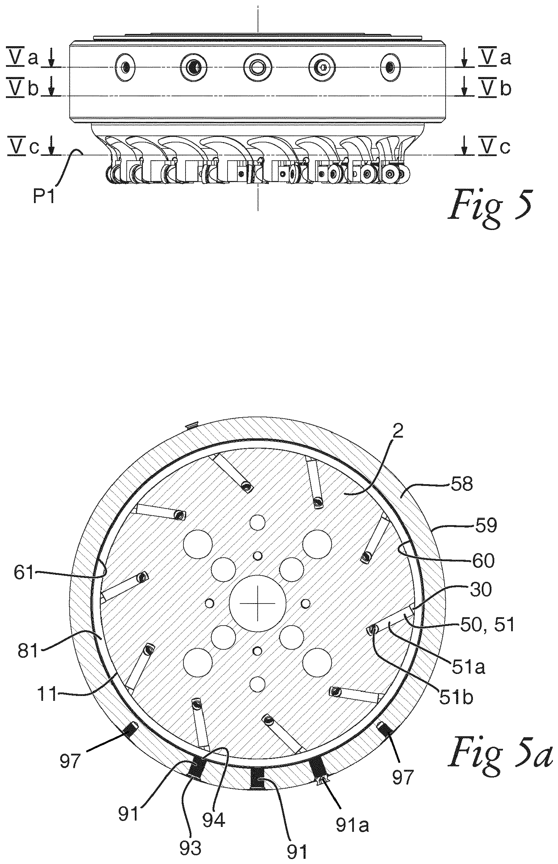

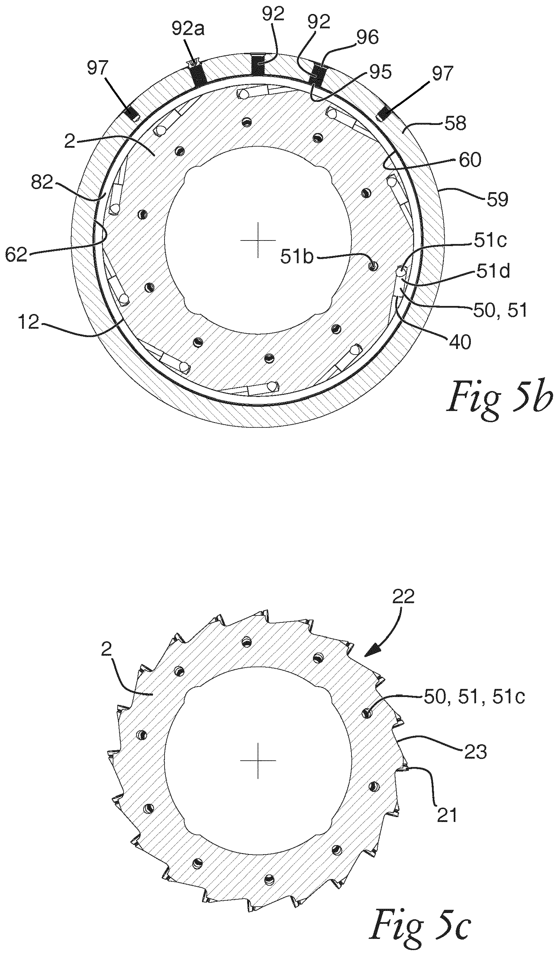

In the illustrated embodiment, the milling tool body 2 comprise ten coolant inlets 30 (Fig 5a) and ten coolant outlets 40 (Fig 5b) evenly distributed in the circumferential direction of the milling tool body 2.

As can best be seen in Fig 3, the coolant inlets 30 are arranged in a first ring-shaped section 11 of the peripheral mantle surface 10, and the coolant outlets are arranged in the second ring-shaped section 12 of the peripheral mantle surface 10. The first ring-shaped section 11 and the second ring-shaped section 12 are separated from each other by an intermediate ring-shaped section 15 of the peripheral mantle surface 10. The first ring shaped section 11 is flanked by a third ring-shaped section 13 of the peripheral surface 10 such that the first ring-shaped section 11 is axially located between the intermediate ring-shaped section 15 and the third ring-shaped section 13 when seen in a direction of the first longitudinal centre axis C1. The second ring-shaped section 12 is flanked by a fourth ring-shaped section 14 of the peripheral mantle surface 10 such that the second ring-shaped section 12 is axially located between the intermediate ring-shaped section 15 and the fourth ring-shaped section 14 when seen in the direction of the first longitudinal centre axis C1. The first, the second, the third, the fourth ring-shaped section 11, 12, 13, 14 and the intermediate ring-shaped section 15 extend between the front end 2a and the axial rear end surface 4.

Each of the third, the fourth and the intermediate ring-shaped section 13, 14, 15 of the peripheral mantle surface 10 of the milling tool body 2, is a surface of revolution. More particularly, each of the third, the fourth and the intermediate ring-shaped section 13, 14, 15 of the peripheral mantle surface 10 of the milling tool body 2, is a circular cylindrical surface, and has a centre axis that coincides with the first longitudinal centre axis C1 of the milling tool body 2. The third, the fourth and the intermediate ring-shaped section 13, 14, 15 are also arranged to be dynamic sealing surfaces and to co-operate with the first, the second and the third sealing ring arrangement 71, 72, 73, respectively. The third, the fourth and the intermediate ring-shaped section 13, 14, 15 have substantially same diameter, i.e. same diameter within manufacturing tolerances, and constitute radially outermost surfaces of the milling tool body. The third, the fourth and the intermediate ring-shaped section 13, 14, 15 may be produced by grinding, honing, polishing, lapping or similar finishing method.

The coolant ring 58 comprises an outer periphery 59 and an inner peripheral surface 60, the inner peripheral surface 60 comprises a first, a second, a third, a fourth and an intermediate ring-shaped section 61, 62, 63, 64, 65.

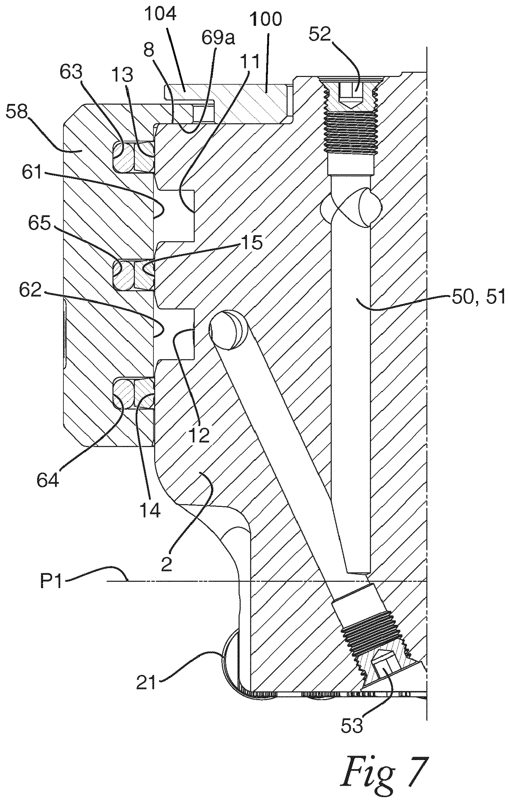

When the milling tool 1 is assembled, as best illustrated in Fig 7, the inner peripheral surface 60 of the coolant ring 58 encircle the peripheral mantle surface 10 of the milling tool body 2 such that the first, the second, the third, the fourth and the intermediate ring-shaped section 61, 62, 63, 64, 65 of the inner peripheral surface 60 of the coolant ring 58 face the first, the second, the third, the fourth and the intermediate ring-shaped section 11, 12, 13, 14, 15 respectively of the peripheral mantle surface 10 of the milling tool body 2. Each of the third, the fourth and the intermediate ring-shaped section 63, 64, 65 of the inner peripheral surface 60 of the coolant ring is a surface of revolution. More particularly, each of the third, the fourth and the intermediate ring-shaped section 63, 64, 65 of the inner peripheral surface 60 of the coolant ring is a circular cylindrical surface and have a common longitudinal centre axis C2. The third, the fourth and the intermediate ring-shaped section 63, 64, 65 are arranged to be static sealing surfaces and to co-operate with the first, the second and the third sealing ring arrangement 71, 72, 73, respectively. Another name for each of the first, the second and the third sealing ring arrangement 71, 72, 73, is sealing O-ring arrangement.

The coolant ring 58 is arranged with a first, a second and a third annular groove 66, 67, 68 in the inner peripheral surface 60 of the coolant ring. The first, the second and the third annular groove in the inner peripheral surface 60 of the coolant ring are arranged to accommodate the first, the second and the third sealing ring arrangement 71, 72, 73 respectively, when the coolant ring 58, the first, the second and the third sealing ring arrangement 71, 72, 73 are mounted onto the tool body 2. In this embodiment, each of the first, the second and the third annular groove respectively in the inner peripheral surface of the coolant ring has a bottom wall and two side walls. At least a part of the bottom wall of the first annular groove 66 constitutes the third ring-shaped section 63 of the inner peripheral surface of the coolant ring. At least a part of the bottom wall of the second annular groove 67 constitutes the fourth ring-shaped section 64 of the inner peripheral surface of the coolant ring. At least a part of the bottom wall of the third annular groove 68 constitutes the intermediate ring-shaped section 65 of the inner peripheral surface of the coolant ring. Each of the third, the fourth and the intermediate ring-shaped section of the inner peripheral surface of the coolant ring has surface properties
Ra ≤ 1,60 µm,
Rz ≤ 10,00 µm,
Rmax ≤ 16,00 µm,
and are produced by turning.

The third, the fourth and the intermediate ring-shaped section 63, 64, 65 are arranged to be static sealing surfaces and to co-operate with the first, the second and the third sealing ring arrangement 71, 72, 73, respectively. The side walls of each of the first, the second and the third annular groove 66, 67, 68 in the inner peripheral surface of the coolant ring preferably have also these surface properties. Each of the third, the fourth and the intermediate ring-shaped section respectively of the peripheral mantle surface of the tool body has surface properties
0,05 ≤ Ra ≤ 0,20 µm,
0,40 ≤ Rz ≤ 1,60 µm,
0,63 ≤ Rmax ≤ 2,50 µm.
and is a dynamic sealing surface. These surfaces are produced by grinding and if necessary also polishing. Each of the first, the second and the third sealing ring arrangement is static in the same way as the coolant ring is.

The first sealing ring arrangement 71 is arranged to be in contact and co-operate with the third ring-shaped section 13 of the peripheral mantle surface 10 of the tool body 2 and the third ring-shaped section 63 of the inner peripheral surface 60 of the coolant ring 58. When the milling tool 1 is assembled, the first sealing ring arrangement 71 (Figs 7-8) is situated and compressed between the third ring-shaped section 13 of the peripheral mantle surface 10 of the tool body 2 and the third ring-shaped section 63 of the inner peripheral surface 60 of the coolant ring 58.

The second sealing ring arrangement 72 is arranged to be in contact and co-operate with the fourth ring-shaped section 14 of the peripheral mantle surface 10 of the tool body 2 and the fourth ring-shaped section 64 of the inner peripheral surface 60 of the coolant ring 58. When the milling tool 1 is assembled, the second sealing ring arrangement 72 is situated and compressed between the fourth ring-shaped section 14 of the peripheral mantle surface 10 of the tool body 2 and the fourth ring-shaped section 64 of the inner peripheral surface 60 of the coolant ring 58.

The third sealing ring arrangement 73 is arranged to be in contact and co-operate with the intermediate ring-shaped section 15 of the peripheral mantle surface 10 of the tool body 2 and the intermediate ring-shaped section 65 of the inner peripheral surface 65 of the coolant ring 58. When the milling tool 1 is assembled, the third sealing ring arrangement 73 is situated and compressed between the intermediate ring-shaped section 15 of the peripheral mantle surface 10 of the tool body 2 and the intermediate ring-shaped section 65 of the inner peripheral surface 65 of the coolant ring 58.

When the milling tool 1 is assembled, the second longitudinal centre axis C2 substantially coincides, i.e. coincides within manufacturing tolerances, with the first longitudinal centre axis C1. Furthermore, a first annular coolant channel 81 is formed between the first ring-shaped section 11 of the peripheral mantle surface 10 and the first ring-shaped section 61 of the inner peripheral surface 60 of the coolant ring 58 (Fig 6a). The first coolant channel 81 is sealed in axial direction by the first sealing ring arrangement 71 and the third sealing ring arrangement 73. A second annular coolant channel 82 is formed between the second ring-shaped section 12 of the peripheral mantle surface 10 and the second ring-shaped section 62 of the inner peripheral surface 60 of the coolant ring 58. The second annular coolant channel 82 is sealed in axial direction by the second sealing ring arrangement 72 and the third sealing ring arrangement 73.

The coolant ring 58 is provided with at least one coolant delivery channel 91 arranged to be in communication with the first annular channel 81, and the coolant ring 58 is furthermore provided with at least one coolant return channel 92 arranged to be in communication with second annular coolant channel 82 (Fig 6a). The illustrated example has tree coolant delivery channels 91 (Fig 5a) and three coolant return channels 92 (Fig 5b). If a coolant delivery channel 91 is not intended to be used for delivering of coolant, it may be plugged by a plug 91a. If a coolant return channel 92 is not intended to be used for returning of coolant, it may be plugged by a plug 92a.

Each of the coolant delivery channels 91 extends from a coolant inlet 93 in the outer periphery 59 of the coolant ring 58 to an orifice 94 in the first ring-shaped section 61 of the inner peripheral surface 60 of the coolant ring 58. Each of the coolant return channels 92 extends from an orifice 95 in the second ring-shaped section 62 of the inner peripheral surface 60 of the coolant ring 58 to a coolant outlet 96 in the outer periphery 59 of the coolant ring 58. In the illustrated example, the coolant inlets 93 and the coolant outlets 96 are provided in a outer radial periphery of the coolant ring.

The coolant ring comprises fastening means 97 for fastening of the coolant ring 58 to the external of the machine, via for example an intermediate fixture, when the milling tool 1 is mounted in the machine, in order to prevent movement and rotation of the coolant ring 58 during use of the milling tool 1. When the milling tool 1 is attached to the machine and when the coolant ring 58 is fastened to the external of the machine, the milling tool body 2 is rotatable relative the coolant ring 58.

The coolant delivery channels 91 and their respective coolant inlets 93 are arranged for connecting a coolant delivering unit, such as a pump to the coolant ring 58. The coolant return channels 92 and their respective coolant outlets 96 are arranged for connecting a coolant return unit to the coolant ring 58. Preferably but not necessarily, the coolant delivery unit, the coolant return unit and the milling tool 2 may form a closed coolant system.

Hence, when the milling tool 1 is attached to the machine, the coolant ring 58 is fixed to the external of the machine in a subsequent step and the coolant delivery and return units are connected to the coolant ring 58. Upon application of a torque, the milling tool body rotates inside the coolant ring. Coolant is supplied to the milling tool via the at least one coolant delivery channels 91 and enters the first annular coolant channel 81 formed between the coolant ring 58 and the milling tool body 2. It enters the milling tool body 2 via the at least one coolant inlet 30 and flows via the cooling duct system 50 to the at least one coolant outlet 40 where it comes to the second annular channel 82. Finally, it leaves the second annular channel 82 via the at least one coolant return channel 92 connected to the coolant return unit. The third sealing ring arrangement 73 prevents leakage of coolant between the first and the second annular coolant channel 81, 82. The first annular sealing ring arrangement 71 prevents leakage of coolant from the first annular coolant channel 81 to the environment and the second sealing ring arrangement 72 prevents leakage of coolant from the second annular coolant channel 82 to the environment. As a result of that, the milling tool body and the milling tool are cooled in a sustainable way.

In the illustrated embodiment, the at least one coolant inlet 30 is arranged in a first groove 31 in the milling tool bod 2. The first groove 31 is an annular groove. The first groove 31 is arranged between the third ring-shaped section 13 and the intermediate section 15. Hence, the first ring-shaped section 11 of the peripheral mantle surface 10 of the milling tool body 2 in this case is a radial bottom surface of the first groove 31, at least partly. In this way, the first annular channel 81 is given a larger volume, and flow of coolant is improved. The first groove 31 is a preferable but not a necessary feature. Instead, or as a complement, the coolant ring 58 may be provided with a groove in the area of the first ring-shaped section 61 of the inner peripheral surface 60 of the coolant ring 58 such that each of the at least one coolant delivery channel 91 has the orifice 94 arranged in the groove in the inner peripheral surface 60 of the coolant ring 58. The first annular channel 81 may, however, be created also without any groove in either the milling tool body 2 or in the coolant ring 58 because the first ring-shaped section 61 of the inner peripheral surface 60 of the coolant ring 58 is given a larger diameter than the first ring-shaped section 11 of the peripheral mantle surface 10 of the milling tool body 2.

In the illustrated embodiment, the at least one coolant outlet 40 is arranged in a second groove 41 in the milling tool bod 2. The second groove 41 is an annular groove (Fig 3). The second groove 41 is arranged between the fourth ring-shaped section 14 and the intermediate section 15. Hence, the second ring-shaped section 12 of the peripheral mantle surface 10 of the milling tool body 2 in this case is a radial bottom surface of the second groove 41, at least partly. In this way, the second annular channel 82 is given a larger volume and flow of coolant is improved. The second groove 41 is a preferable but not a necessary feature. Instead, or as a complement, the coolant ring 58 may be provided with a groove in the area of the second ring-shaped section 62 of the inner peripheral surface 60 of the coolant ring 58 such that each of the at least one coolant return channel 92 has the orifice 95 arranged in said groove in the inner peripheral surface 60 of the coolant ring 58. The second annular channel 82 may, however, be created also without any groove in either the milling tool body 2 or in the coolant ring 58 because the second ring-shaped section 62 of the inner peripheral surface 60 of the coolant ring 58 is given a larger diameter than the second ring-shaped section 12 of the peripheral mantle surface 10 of the milling tool body 2.

As illustrated in Figs 5c and 7, the coolant duct system 50 extends partly within the front end 2a of the milling tool body 2 and intersects a first plane P1 that is perpendicular to the first longitudinal rotation centre axis C1. The first plane P1 intersects each chip pocket 22 provided in front of each of the at least two insert seats 20. The first plane P1 may also be situated closer to the axial front end surface 3 such that it intersects also each insert seat of the at least two insert seats.

As it may be seen in Fig 3, the third, the fourth and the intermediate ring-shaped section 13, 14, 15 have substantially same diameter, i.e. they have same diameter within manufacturing tolerances. This arrangement is beneficial because the third, the fourth and the intermediate ring-shaped section 13, 14, 15 may be easier produced to the required tolerances, both when it comes to the diameter measure and to the surface quality of the third, the fourth and the intermediate ring-shaped section 13, 14, 15.

As mentioned, the third, the fourth and the intermediate ring-shaped section 13, 14, 15 are substantially arranged on the first common imaginary cylinder. In the illustrated embodiment, the first common imaginary cylinder completely encloses the milling tool body 2 in a region from the axial rear end surface 4 to the fourth ring-shaped section 14. Hence, no part of the milling tool body 2 protrudes radially outward from the first common imaginary cylinder in the region from the axial rear end surface 4 to the fourth ring-shaped section 14. Thanks to this, the coolant ring 58 may be done in one piece and it may be mounted onto the milling tool body in an easy way wherein the coolant ring in a first step is placed such that its first axial end surface 59a faces the axial rear end surface 4 of the milling tool body 2 after which the coolant ring 58, in a second step, is put on the milling tool body in a direction of the first longitudinal centre axis C1 such that the second sealing ring arrangement 72 enters the third ring-shaped section 13 of the milling tool body 2. Upon further pressing of the coolant ring in the direction of the first longitudinal centre axis C1, in a third step, the second sealing ring arrangement 72 slides over and past the third ring-shaped section 13. In a fourth step, and upon further pressing of the coolant ring in the direction of the first longitudinal centre axis C1, the second sealing ring arrangement 72 enters the intermediate ring-shaped section 15 of the milling tool body 2 and the third sealing ring arrangement 73 enters the third ring-shaped section 13 of the milling tool body. Upon further pressing of the coolant ring in the direction of the first longitudinal centre axis C1, in a fifth step, the second and the third sealing ring arrangement 72, 73 slide over and past the intermediate and the third ring-shaped section 15, 13, respectively. In a sixth step, upon further pressing of the coolant ring in the direction of the first longitudinal centre axis C1, the first sealing ring arrangement 71 enters the third ring-shaped section 13 of the milling tool body, the third sealing ring arrangement 73 enters the intermediate ring-shaped section 15 and the second sealing ring arrangement 72 enters the fourth ring-shaped section 14 of the milling tool body until the coolant ring 58 has right axial position in relation to the milling tool body 2. The coolant ring 58 has an axial end portion 69 in form of a flange 69 that facilitates mounting of the coolant ring 58 in the right axial position in relation to the milling tool body 2. The flange 69 has an annular surface 69a that abuts an annular surface 8 of the milling tool body 2 when the coolant ring is put on the milling tool body 2 and has right axial position in relation to the milling tool body 2. In the illustrated embodiment, the first common imaginary cylinder completely encloses the entire milling tool body 2 from the axial front end surface 3 to the axial rear end surface 4.

As can best be seen in Fig 7, a first truncated conical transition surface is provided between the third ring-shaped section 13 of the outer peripheral surface 10 of the milling tool body 2 and the annular surface 8 of the milling tool body 2. The first truncated conical transition surface connects to the third ring-shaped section 13 via a convex radius-shaped surface having a radius of curvature of 1 mm. The first truncated conical transition surface connects to the annular surface 8 also via a convex radius-shaped surface having a radius of curvature of 1 mm. This facilitates mounting of the coolant ring 58 onto the milling tool body since the second, the third and the fourth sealing ring arrangement may more easily enter the third ring-shaped section 13 in the second, the fourth and the sixth step, respectively, of mounting of the coolant ring. It decreases risk that the third and the fourth sealing ring arrangement get damaged during mounting of the ring. A second truncated conical transition surface is provided between the third ring-shaped section 13 and the first annular groove 31 in the milling tool body. The second truncated conical transition surface connects to the third ring-shaped section 13 via a convex radius-shaped surface having a radius of curvature of 1 mm. The second truncated conical transition surface connects to the first annular groove 31 also via a convex radius-shaped surface having a radius of curvature of 1 mm. This decreases risk that the second and the third sealing ring arrangement get damaged in the third and the fifth step, respectively, of mounting of the coolant ring when the second and the third sealing ring arrangement slide over and past the third ring-shaped section 13. In the same way, a third truncated conical transition surface is provided between the intermediate ring-shaped section 15 and the first annular groove 31 in the milling tool body 2. The third truncated conical transition surface connects to the first annular groove 31 via a convex radius-shaped surface having a radius of curvature of 1 mm and the third truncated conical transition surface connects to the intermediate ring-shaped section 15 via a convex radius-shaped surface having a radius of curvature of 1 mm. A fourth truncated conical transition surface is provided between the intermediate ring-shaped section 15 and the second annular groove 41 in the milling tool body 2. The fourth truncated conical transition surface connects to the second annular groove 41 via a convex radius-shaped surface having a radius of curvature of 1 mm and the furth truncated conical transition surface connects to the intermediate ring-shaped section 15 via a convex radius-shaped surface having a radius of curvature of 1 mm. A fifth truncated conical transition surface is provided between the fourth ring-shaped section 14 and the second annular groove 41. The fifth truncated conical transition surface connects to the second annular groove 41 via a convex radius-shaped surface having a radius of curvature of 1 mm and the fifth truncated conical transition surface connects to the fourth ring-shaped section 14 via a convex radius-shaped surface having a radius of curvature of 1 mm. Each of the first, the second, the third, the fourth and the fifth truncated conical transition surface and the associated convex radius-shaped surfaces have preferably same surface properties as the third, the fourth and the intermediate ring-shaped section 13, 14, 15 and are produced with the same method, i.e. by grinding and possibly also polishing.

Each of the first, the second, the third, the fourth and the fifth truncated conical transition surface builds an inner angle with the associated ring-shaped section of the outer peripheral surface 10 of the milling tool body 2. Said inner angle is measured within the material of the milling tool body 2 and is 5-25°, preferably 10-20°. Each said convex radius-shaped surface may have a radius of curvature having another value different from 1 mm.

The milling tool body 2 may, for example, be arranged such that the intermediate ring-shaped section 15 has a larger diameter than the third ring-shaped section 13 and that the fourth ring-shaped section 14 has a larger diameter than the intermediate ring-shaped section 15. This would make it easier to mount the coolant ring 58 onto the milling tool body.

As it may be seen in Figs 5a-c, the milling tool body 2 has ten coolant inlets 30 and ten coolant outlets 40. The coolant duct system 50 comprises also ten coolant channels 51 and two of them are visible in Fig 6b. Each of these ten coolant channels 51 extend from only one of the ten coolant inlets 30 to only one of the ten coolant outlets 40. Hence, each of these ten coolant channels 51 are individual channels that do not intersect any of the other nine coolant channels 51. Each of these ten coolant channels 51 comprise a first coolant sub-channel 51a that extends from a coolant inlet 30 a bit radially inward the milling tool body 2 to a second sub-channel 51b of said coolant channel 51 (Fig 5a). The first coolant sub-channel 51a in the illustrated embodiment is a straight channel that may be produced by drilling. This second coolant sub-channel 51b extends substantially in the axial direction of the milling tool body 2 through the milling tool body 2, from the first coolant sub-channel 51a toward the front end 2a of the milling tool body 2 (Fig 6b). The second coolant sub-channel 51b is produced by drilling through an axial rear surface of the milling tool body 2 and is plugged by a plug 52 at an axial end of the second coolant sub-channel 51b intersecting the axial rear surface. The second coolant sub-channel 51b is a straight channel and extends to a third coolant sub-channel 51c of said coolant channel 51. The third coolant sub-channel 51c is produced by drilling through the axial front end surface 3 and extends a bit axially rearwardly and radially outwardly in the milling tool body to a fourth coolant sub-channel 51d (Fig 5b). At an end of the third coolant sub-channel 51c intersecting the axial front end surface 3, the third coolant sub-channel 51c is plugged by a plug 53. The fourth coolant sub-channel 51d extends from the third coolant sub-channel 51c to a coolant outlet 40. Since the first, the second, the third and the fourth coolant sub-channel 51a, 51b, 51c, 51d are in fluid communication with each other and since the second and the third coolant sub-channel are plugged by plugs 52, 53 respectively, coolant provided via the coolant inlet 30 will flow through the coolant channel 51 to the coolant outlet 40 without leaving the milling tool body 2. The milling tool body 2 or parts of it may also be produced by additive manufacturing in order to produce the coolant duct system 50.

As earlier explained, the coolant ring 58 is arranged with a first, a second and a third annular groove 66, 67, 68 in the inner peripheral surface 60 of the coolant ring. The first, the second and the third annular groove 66, 67, 68 in the inner peripheral surface 60 of the coolant ring are arranged to accommodate the first, the second and the third sealing ring arrangement 71, 72, 73 respectively, when the coolant ring 58, the first, the second and the third sealing ring arrangement 71, 72, 73 are mounted onto the tool body 2. In the illustrated example, the first, the second and the third annular groove 66, 67, 68 in the inner peripheral surface 60 of the coolant ring have same diameter and same width.

The first sealing ring arrangement 71 comprises a first sealing ring 71a, i.e. a first sealing O-ring 71a, and a second sealing ring 71b, i.e. a second sealing O-ring 71b. In the illustrated example, said first sealing ring 71a is in contact and co-operates with the third ring-shaped section 13 of the peripheral mantle surface 10 of the milling tool body 2, and said second sealing ring 71b is in contact and co-operates with the third ring-shaped section 63 of the inner peripheral surface 60 of the coolant ring 58.

The second sealing ring arrangement 72 comprises a first sealing ring 72a, , i.e. a first sealing O-ring 72a and a second sealing ring 72b, , i.e. a second sealing O-ring 72b. In the illustrated example, said first sealing ring 72a is in contact and co-operates with the fourth ring-shaped section 14 of the peripheral mantle surface 10 of the milling tool body 2, and said second sealing ring 72b is in contact and co-operates with the fourth ring-shaped section 64 of the inner peripheral surface 60 of the coolant ring 58

The third sealing ring arrangement 73 comprises a first sealing ring 73a, , i.e. a first sealing O-ring 73a and a second sealing ring 73b, , i.e. a second sealing O-ring 73b. In the illustrated example, said third sealing ring 73a is in contact and co-operates with the intermediate ring-shaped section 15 of the peripheral mantle surface 10 of the milling tool body 2, and said second sealing ring 73b is in contact and co-operates with the intermediate ring-shaped section 65 of the inner peripheral surface 60 of the coolant ring 58.

The first and the second sealing ring of each of the first, the second and the third sealing ring arrangement 71, 72, 73 are concentric to each other and the first sealing ring is smaller in diameter than the associated second sealing ring. Each first sealing ring 71a, 72a, 73a is of hard plastic, more particularly of polytetrafluoroethylene PTFE. The first sealing rings 71a, 72a, 73a have also substantially same dimensions, i.e. same dimensions within manufacturing tolerances. Each second sealing ring 71b, 72b, 73b is of elastomer, more particularly of fluorinated propylene monomer FPM. The second sealing rings 71b, 72b, 73b have also substantially same dimensions, i.e. same dimensions within manufacturing tolerances, and have a circular cross-section in uncompressed, i.e. in unloaded, condition.

In an alternative embodiment (not illustrated), instead of providing the first, the second and the third annular groove 66, 67, 68 in the inner peripheral surface 60 of the coolant ring, the milling tool body 2 may be provided with a third, a fourth and a fifth annular groove in the peripheral mantle surface 10 of the milling tool body 2, wherein the third, the fourth and the fifth annular groove in the peripheral mantle surface 10 are arranged to accommodate the first, the second and the third sealing ring arrangement 71, 72, 73 respectively when the coolant ring 58, the first, the second and the third sealing ring arrangement 71, 72, 73 are mounted onto the tool body 2. The third, the fourth and the fifth annular groove in the peripheral mantle surface 10 of the milling tool body 2 may have same diameter and same width. Each sealing ring arrangement 71, 72, 73 may comprise a first sealing ring and a second sealing ring. In this embodiment, the first sealing ring has a larger diameter than the associated second sealing ring and is in contact and co-operates with inner peripheral surface 60 of the coolant ring 58 when the coolant ring 58, the first, the second and the third sealing ring arrangement 71, 72, 73 are mounted onto the tool body 2. Each first sealing ring is of hard plastic, more particularly of polytetrafluoroethylene PTFE. The first sealing rings may have substantially same dimensions, i.e. same dimensions within manufacturing tolerances. Each second sealing ring is of elastomer, more particularly of fluorinated propylene monomer FPM and may have substantially same dimension, i.e. same dimensions within manufacturing tolerances.

In the illustrated embodiment, the first and the second ring-shaped section 61, 62 of the inner peripheral surface 60 of the coolant ring 59 are arranged on a second common imaginary cylinder. A fifth ring-shaped section of the inner peripheral surface 60 of the coolant ring 59, which is arranged between the second annular groove 67 and the first axial end surface 59a of the coolant ring, as well as a sixth ring-shaped section of the inner peripheral surface 60 of the coolant ring, which is arranged between the first annular groove 66 and the flange 69 are also arranged on the second common imaginary cylinder. This second common imaginary cylinder has a larger diameter than the first common imaginary cylinder on which the third, the fourth and the intermediate ring-shaped section 13, 14, 15 of the peripheral mantle surface 10 of the milling tool body 2, are arranged. Hence, the coolant ring 58 is centered in relation to the milling tool body 2 by the first, the second and the third sealing ring arrangement 71, 72, 73 such that the second longitudinal centre axis C2 coincides, within manufacturing tolerances, with the first longitudinal centre axis C1 when the coolant ring 58, the first, the second and the third sealing ring arrangement are mounted onto the milling tool body. Additionally, when the coolant ring 58, the first, the second and the third sealing ring arrangement are mounted onto the tool body 2, a bearing function between the coolant ring 58 and the milling tool body 2 during a rotary motion of the milling tool body 2 inside the coolant ring 58 is provided by the first, the second and the third sealing ring arrangement, more particularly by the first sealing rings 71a, 72a, 73a.

In the illustrated embodiment, the milling tool 1 comprises a securing ring 100 as a precaution. The securing ring 100 is not an essential part and has a function to ensure that the coolant ring 59 does not slide off the milling tool body 2 during transport of the milling tool 1. The securing ring 100 is provided with eight through holes 101 and is secured to the milling tool body 2 by eight screws 102 that co-operate with threaded holes 103 in the annular surface 8 of the milling tool body 2 (Fig 4a-b). As can best be observed in Fig 7, the securing ring 100 comprises a flange 104 that radially overlap the coolant ring 58 but is not in contact with the coolant ring 58.

The cutter body is made from steel, for example 30CrNiMo8, and it is gas nitrated. The coolant ring 58 is made from aluminum bronze, for example CuAl10NiFe, that has low weight a good resistance against corrosion.

The cutting inserts 21 in the illustrated example are round inserts. Since each of the at least two insert seats 20 is formed in a replaceable cartridge 24 mounted into the milling tool body 2, other insert shapes may also be used as the cartridges may easily be replaced by cartridges with a different insert seat.

A cutting diameter of the illustrated embodiment is 315 mm. The first common imaginary cylinder on which the third, the fourth and the intermediate ring-shaped section 13, 14, 15 of the peripheral mantle surface 10 of the milling tool body 2 are arranged, has a diameter 350 mm. The second common imaginary cylinder has a diameter 350,6 mm. The sealing ring arrangements 71, 72, 73 are machined, i.e. turned, to an inner diameter of 349,2 mm. More particularly, the first sealing rings are turned to an inner diameter of 349,2 mm after the first, the second and the third sealing ring arrangement being placed in the first, the second and the third annular groove respectively in the inner peripheral surface of the coolant ring and before the coolant ring together with the sealing ring arrangements 71, 72, 73 is mounted onto the milling tool body. When the coolant ring and the sealing ring arrangements are mounted onto the milling tool body, a torque of 180 Nm is required to rotate the milling tool body inside the coolant ring. Typical coolant pressure used is 20-50 bar. The arrangement of the milling tool body with the first, the second, the third, the fourth and the fifth truncated conical transition surface and the associated convex radius-shaped surfaces, facilitates mounting of the coolant ring onto the milling tool body, and gives opportunity to achieve sealing of the first and the second annular channel 81, 82 which may withstand higher coolant pressure.

Any coolant medium in liquid or vapor state may be used, for example water, air, liquid nitrogen, CO₂ or the like.

The invention is of course not in any way restricted to the embodiments described above. On the contrary, many possibilities to modifications thereof will be apparent to a person with ordinary skill in the art without departing from the basic idea of the invention such as defined in the appended claims. For example, the coolant ring may be a two-piece coolant ring such that it is done of two 180° halves that together create a ring. In the interfaces between these two halves, the coolant ring may be provided with sealing gaskets. The coolant ring may also be done of two rings, wherein the first ring serves for coolant delivery to the first annular channel 81, and the second ring serves for coolant return from the second annular channel 82.

## Claims

1. A milling tool body (2) for a milling tool (1), the milling tool body (2) comprising:
- an axial front end surface (3),
- an axial rear end surface (4) opposite to the axial front end surface (3),
- a peripheral mantle surface (10) extending between the axial front end surface (3) and the axial rear end surface (4),
- a front end (2a) extending from the axial front end surface (3) toward the axial rear end surface (4),
- a rear end (2b) extending from the axial rear end surface (4) toward the front end (2a) of the milling tool body (2), the rear end (2b) being configured for attachment of the milling tool (1) to a machine,
- a first longitudinal centre axis (C1) extending between the axial front end surface (3) and the axial rear end surface (4), the tool body being rotatable around the first longitudinal centre axis (C1) in a direction of rotation (R),
- at least two insert seats (20) being entirely provided in the front end (2a) and distributed in a circumferential direction of the milling tool body, each of the at least two insert seats (20) being configured to accommodate a cutting insert (21),
- a chip pocket (22) being provided in front of each of the at least two insert seats (20) in the direction of rotation (R) and delimited by a chip pocket wall (23) entirely provided in the front end (2a);
wherein at least one coolant inlet (30) and the at least one coolant outlet (40) are being disposed in the milling tool body (2),
wherein a cooling duct system (50) contained in the milling tool body (2) is extending from the at least one coolant inlet (30) to the at least one coolant outlet (40), wherein the cooling duct system (50) is arranged such that coolant supplied via the at least one coolant inlet (30) flows through the cooling duct system (50) to the at least one coolant outlet (40) without leaving the milling tool body (2) along its way between the at least one coolant inlet (30) and the at least one coolant outlet (40);
**characterized in that** the at least one coolant inlet (30) is arranged in a first ring-shaped section (11) of the peripheral mantle surface (10), and the at least one coolant outlet (40) is arranged in a second ring-shaped section (12) of the peripheral mantle surface, wherein the first and the second ring-shaped section are separated from each other by an intermediate ring-shaped section (15) of the peripheral mantle surface (10), wherein the first ring-shaped section (11) is flanked by a third ring-shaped section (13) of the peripheral mantle surface (10) such that the first ring-shaped section (11) is axially located between the intermediate ring-shaped section (15) and the third ring-shaped section (13) when seen in a direction of the first longitudinal centre axis (C1), wherein the second ring-shaped section (12) is flanked by a fourth ring-shaped section (14) of the peripheral mantle surface (10) such that the second ring-shaped section (12) is axially located between the intermediate ring-shaped section (15) and the fourth ring-shaped section (14) when seen in the direction of the first longitudinal centre axis (C1), wherein the first, the second, the third, the fourth ring-shaped section (11, 12, 13, 14) and the intermediate ring-shaped section (15) extend between the front end (2a) and the axial rear end surface (4), wherein each of the third, the fourth and the intermediate ring-shaped section (13, 14, 15) is a surface of revolution created by a 360° rotation of a curve or a line around the first longitudinal centre axis (C1) of the milling tool body (2), and is arranged to be a sealing surface and co-operate with a sealing ring arrangement.

2. A milling tool body (2) according to claim 1, **characterized in**
- **that** the at least one coolant inlet (30) is arranged in a first groove (31) in the milling tool body (2) arranged between the third ring-shaped section (13) and the intermediate ring-shaped section (15), and/or
- **that** the at least one coolant outlet (40) is arranged in a second groove (41) in the milling tool body (2) arranged between the fourth ring-shaped section (14) and the intermediate ring-shaped section (15).

3. A milling tool body (2) according to claim 2, **characterized in that** the first groove (31) is a first annular groove (31), and/or that the second groove (41) is a second annular groove (41).

4. A milling tool body (2) according to any of claims 1-3, **characterized in that** the coolant duct system extends partly within the front end (2a) of the milling tool body (2), preferably intersecting a first plane (P1) that is perpendicular to the first longitudinal rotation centre axis (C1), wherein the first plane (P1) intersects each chip pocket (22) provided in front of each of the at least two insert seats (20) and/or wherein the first plane (P1) intersects each of the at least two insert seats (20).

5. A milling tool body (2) according to any of claims 1-4, **characterized in that** each of the third, the fourth and the intermediate ring-shaped section (13, 14, 15) is circular cylindrical and that they have substantially same diameter.

6. A milling tool body (2) according to claim 5, **characterized in that** the third, the fourth and the intermediate ring-shaped section (13, 14, 15) is substantially arranged on a first common imaginary cylinder,
- wherein the milling tool body (2) is arranged such that the first common imaginary cylinder completely encloses the milling tool body (2) in a region from the axial rear end surface (4) to one of the third and the fourth ring-shaped section (13, 14) that is arranged further away from the axial rear end surface (4) than the other one of the third and the fourth ring-shaped section (13, 14), and/or
- wherein the milling tool body (2) is arranged such that the first common imaginary cylinder completely encloses the milling tool body (2) in a region from the axial front end surface (3) to one of the third and the fourth ring-shaped sections (13, 14) that is arranged further away from the axial front end surface (3) than the other one of the third and the fourth ring-shaped section (13, 14).

7. A milling tool body (2) according to any of claims 1-6, **characterized in that** the at least one coolant inlet (30) is a plurality of coolant inlets (30), that the at least one coolant outlet (40) is a plurality of coolant outlets (40), that the coolant duct system (50) comprises a plurality of coolant channels (51), and that each coolant channel (51) of the plurality of coolant channels (51) extends from only one coolant inlet (30) of the plurality of coolant inlets (30) to only one coolant outlet (40) of the plurality of the coolant outlets (40).

8. A milling tool (1) comprising a milling tool body (2) according to any of claims 1-7, **characterized in that** the milling tool (1) furthermore comprises
- a coolant ring (58), the coolant ring (58) comprises an outer periphery (59) and an inner peripheral surface (60), the inner peripheral surface (60) comprises a first, a second, a third, a fourth and an intermediate ring-shaped section (61, 62, 63, 64, 65), wherein each of the third, the fourth and the intermediate ring-shaped section (63, 64, 65) is a surface of revolution created by a 360° rotation of a curve or a line around a common second longitudinal centre axis (C2), and is arranged to be a sealing surface and co-operate with a sealing ring arrangement,
the coolant ring (58) is arranged to be mounted onto the milling tool body (2) such that the inner peripheral surface (60) of the coolant ring (58) encircle the peripheral mantle surface (10) of the milling tool body (2) and such that the first, the second, the third, the fourth and the intermediate ring-shaped section (61, 62, 63, 64, 65) of the inner peripheral surface (60) of the coolant ring (58) face the first, the second, the third, the fourth and the intermediate ring-shaped section (11, 12, 13, 14, 15) respectively of the peripheral mantle surface (10) of the milling tool body (2),
- a first sealing ring arrangement (71) arranged to be mounted between and co-operate with the third ring-shaped section (13) of the peripheral mantle surface (10) of the tool body (2) and the third ring-shaped section (63) of the inner peripheral surface (60) of the coolant ring (58),
- a second sealing ring arrangement (72) arranged to be mounted between and co-operate with the fourth ring-shaped section (14) of the peripheral mantle surface (10) of the tool body (2) and the fourth ring-shaped section (64) of the inner peripheral surface (60) of the coolant ring (58),
- a third sealing ring arrangement (73) arranged to be mounted between and co-operate with the intermediate ring-shaped section (15) of the peripheral mantle surface (10) of the tool body (2) and the intermediate ring-shaped section (65) of the inner peripheral surface (65) of the coolant ring (58),
wherein the coolant ring (58), the first, the second and the third sealing ring arrangement (71, 72, 73) are arranged such that when mounted onto the tool body (2)
• the second longitudinal centre axis (C2) substantially coincides with the first longitudinal centre axis (C1),
• a first annular coolant channel (81) is formed between the first ring-shaped section (11) of the peripheral mantle surface (10) and the first ring-shaped section (61) of the inner peripheral surface (60) of the coolant ring (58), and sealed in axial direction by the first sealing ring arrangement (71) and the third sealing ring arrangement (73),
• a second annular coolant channel (82) is formed between the second ring-shaped section (12) of the peripheral mantle surface (10) and the second ring-shaped section (62) of the inner peripheral surface (60) of the coolant ring (58), and sealed in axial direction by the second sealing ring arrangement (72) and the third sealing ring arrangement (73), and
• the milling tool body (2) is rotatable relative the coolant ring (58),
wherein the coolant ring (58) is provided with at least one coolant delivery channel (91) arranged to be in communication with the first annular channel (81), wherein the coolant ring (58) is furthermore provided with at least one coolant return channel (92) arranged to be in communication with second annular coolant channel (82), each of the at least one coolant delivery channel (91) extends from a coolant inlet (93) in the outer periphery (59) of the coolant ring (58) to an orifice (94) in the first ring-shaped section (61) of the inner peripheral surface (60) of the coolant ring (58), and each of the at least one coolant return channel (92) extends from an orifice (95) in the second ring-shaped section (62) of the inner peripheral surface (60) of the coolant ring (58) to a coolant outlet (96) in the outer periphery (59) of the coolant ring (58), the coolant ring comprises fastening means (97) for fastening of the coolant ring (58) to the external of the machine when the milling tool (1) is mounted in the machine in order to prevent movement and rotation of the coolant ring (58).

9. A milling tool (1) according to claim 8, **characterized in**
- **that** the coolant ring (58) is arranged with a first, a second and a third annular groove (66, 67, 68) in the inner peripheral surface (60), the first, the second and the third annular groove are arranged to accommodate the first, the second and the third sealing ring arrangement (71, 72, 73) respectively, when the coolant ring (58), the first, the second and the third sealing ring arrangement are mounted onto the tool body (2), or
- **that** the milling tool body (2) is arranged with a third, a fourth and a fifth annular groove in the peripheral mantle surface (10), wherein the third, the fourth and the fifth annular groove are arranged to accommodate the first, the second and the third sealing ring arrangement (71, 72, 73) respectively, when the coolant ring (58), the first, the second and the third sealing ring arrangement (71, 72, 73) are mounted onto the tool body (2).

10. A milling tool (1) according to any of claims 8-9, **characterized in that** each of the first, the second and the third sealing ring arrangement (71, 72, 73) comprises a first sealing ring (71a, 72a, 73a) and a second sealing ring (71b, 72b, 73b), wherein the first and the second sealing ring of each of the first, the second and the third sealing ring arrangement (71, 72, 73) are concentric to each other such that one of them has a smaller diameter and is arranged radially inward from the other one and closer to the first longitudinal centre axis (C1) when the coolant ring (58), the first, the second and the third sealing ring arrangement (71, 72, 73) are mounted onto the milling tool body (2).

11. A milling tool (1) according to claim 10, **characterized in that** the first sealing ring (71a, 72a, 73a) of each of the first, the second and the third sealing ring arrangement (71, 72, 73) is of hard plastic, preferably of polytetrafluoroethylene PTFE, and the second sealing ring (71b, 72b, 73b) of each of the first, the second and the third sealing ring arrangement (71, 72, 73) is of elastomer, preferably of fluorinated propylene monomer FPM.

12. A milling tool (1) according to claim 11, **characterized in that** the coolant ring (58) is arranged with a first, a second and a third annular groove (66, 67, 68) in the inner peripheral surface (60), the first, the second and the third annular groove (66, 67, 68) are arranged to accommodate the first, the second and the third sealing ring arrangement (71, 72, 73) respectively, when the coolant ring (58), the first, the second and the third sealing ring arrangement (71, 72, 73) are mounted onto the tool body (2), wherein the first and the second sealing ring of each of the first, the second and the third sealing ring arrangement (71, 72, 73) are arranged such that the first sealing ring (71a, 72a, 73a) has a smaller diameter than the second sealing ring (71b, 72b, 73b) and is in contact and co-operates with the peripheral mantle surface (10) of the milling tool body (2) when the coolant ring (58), the first, the second and the third sealing ring arrangement are mounted onto the tool body (2).

13. A milling tool (1) according to claim 11, **characterized in that** the milling tool body (2) is arranged with a third, a fourth and a fifth annular groove in the peripheral mantle surface (10), wherein the third, the fourth and the fifth annular groove are arranged to accommodate the first, the second and the third sealing ring arrangement (71, 72, 73) respectively, when the coolant ring (58), the first, the second and the third sealing ring arrangement (71, 72, 73) are mounted onto the tool body (2), wherein the first and the second sealing ring of each of the first, the second and the third sealing ring arrangement (71, 72, 73) are arranged such that the first sealing ring (71a, 72a, 73a) has a larger diameter than the second sealing ring (71b, 72b, 73b) and is in contact and co-operates with inner peripheral surface (60) of the coolant ring (58) when the coolant ring (58), the first, the second and the third sealing ring arrangement (71, 72, 73) are mounted onto the tool body (2).

14. A milling tool (1) according to any of claims 8-13, **characterized in that** the coolant ring (58) is provided with an annular surface at an axial end portion of the coolant ring (58), the annular surface is arranged to abut an annular surface provided on the milling tool body (2) when the coolant ring (58), the first, the second and the third sealing ring arrangement (71, 72, 73) are mounted onto the tool body (2) in order to facilitate mounting of the coolant ring (58) onto the milling tool body in right longitudinal position, the annular surface provided on the milling tool body (2) has its center point substantially arranged on the first longitudinal centre axis (C1), and the annular surface provided on the coolant ring (58) has its center point substantially arranged on the second longitudinal centre axis (C2).

15. A milling tool (1) according to any of claims 8-14, **characterized in that** the coolant ring (58), the first, the second and the third sealing ring arrangement (71, 72, 73) are arranged such that the coolant ring (58) is centered in relation to the milling tool body (2) by the first, the second and the third sealing ring arrangement (71, 72, 73) such that the second longitudinal centre axis (C2) substantially coincides with the first longitudinal centre axis (C1) when the coolant ring (58), the first, the second and the third sealing ring arrangement (71, 72, 73) are mounted onto the tool body (2).

16. A milling tool (1) according to any of claims 8-15, **characterized in that** when the coolant ring (58), the first, the second and the third sealing ring arrangement are mounted onto the tool body (2), a bearing function between the coolant ring (58) and the milling tool body (2) during a rotary motion of the milling tool body (2) inside the coolant ring (58) is provided by the first, the second and the third sealing ring arrangement.

17. A milling tool (1) according to any of claims 8-16, **characterized in that** the coolant ring (58) has lower density than the milling tool body (2).

18. A system for delivering a coolant, the system comprising a milling tool (1) according to any of claims 8-17 connected to the system, wherein the system furthermore comprises a coolant delivering unit connected to the milling tool (1) via the coolant inlet (93) of the at least one coolant delivery channel (91), and wherein the system comprises a coolant return unit connected to the milling tool (1) via the coolant outlet (96) of the at least one coolant return channel (92).
